# EUROPEAN PATENT APPLICATION

(11) **EP 4 847 647 A1**
(43) Date of publication of application: **02.12.2026**
(21) Application number: 25745237.5
(22) Date of filing: 23.01.2025
(51) Int. Cl.: C22C 38/00, C21D 8/12, C22C 38/60, H01F 1/147, H02K 1/02

(54) **NON-ORIENTED ELECTROMAGNETIC STEEL SHEET, ROTOR CORE, STATOR CORE, AND MOTOR**

(30) Priority: 25.01.2024 JP 2024009830
(71) Applicant: Nippon Steel Corporation, Tokyo 100-8071 (JP)
(72) Inventor: NATORI, Yoshiaki, Tokyo 100-8071 (JP); YASHIKI, Hiroyoshi, Tokyo 100-8071 (JP); FUKUCHI, Minako, Tokyo 100-8071 (JP); TAKEDA, Kazutoshi, Tokyo 100-8071 (JP)
(74) Representative: Vossius & Partner Patentanwälte Rechtsanwälte mbB
(86) International application number: PCT/JP2025/002117
(87) International publication number: WO 2025/159168

(57) **Abstract**

A non-oriented electrical steel sheet is provided in which high strength and excellent magnetic flux density are obtained, and furthermore, excellent iron loss is obtained. A non-oriented electrical steel sheet according to the present disclosure has the chemical composition described in the description, and a sheet thickness t is 0.30 mm or less, F1 defined by Formula (1) is 10.0 or more, F2 defined by Formula (2) is 8.5 or less, F3 defined by Formula (3) is an iron loss W_{5/1000} or less at a frequency of 1000 Hz and a magnetic flux density of 0.5 T, and F4 defined by Formula (4) is an iron loss W_{10/400} or more at a frequency of 400 Hz and a magnetic flux density of 1.0 T when the non-oriented electrical steel sheet is heat-treated for one hour at 800°C. $F 1 = 4 Si + 3 Al + 2 Mn$ (1) $F 2 = 2 Si + 3 Al + Mn$ (2) $F 3 = 45 - 12 Si - 5 Al - 2 Mn + 1000 \times t / \left(5+6Si+5Al+3Mn\right)$ (3) $F 4 = 4 + 800 \times t / \left(5+6Si+5Al+3Mn\right)$ (4)

## Description

### TECHNICAL FIELD

The present disclosure relates to a non-oriented electrical steel sheet, a rotor core and a stator core that are produced using the non-oriented electrical steel sheet as a starting material, and a motor that includes the rotor core and the stator core.

### BACKGROUND ART

Non-oriented electrical steel sheets are widely utilized as a starting material for motor cores provided in motors. A motor core includes a rotor core that is a rotating part, and a stator core that is a stationary part. The properties required for rotor cores and stator cores are different from each other.

Specifically, a rotor core is required to not only have low iron loss in order to increase the motor efficiency, but is also required to have high strength due to the following reason. Motors for use in electric vehicles and hybrid vehicles are being designed to increase motor output by increasing the motor rotation speed. Increasing the motor output increases the centrifugal force applied to the rotor core, which is a rotating part, during operation of the motor. Therefore, the rotor core is required to have high strength as well as good iron loss.

On the other hand, a stator core is not required to have the same level of high strength as a rotor core, but is required, in particular, to have excellent iron loss in order to increase the motor efficiency.

As described above, the required level of strength and level of iron loss differ between a rotor core and a stator core. On the other hand, a rotor core and a stator core are produced using the same non-oriented electrical steel sheet as a starting material. Specifically, the rotor core and the stator core are punched from the same non-oriented electrical steel sheet.

Therefore, Japanese Patent Application Publication No. 2008-050686 (Patent Literature 1) proposes a technique for obtaining a rotor core that has high strength and a stator core that is excellent in iron loss characteristics from the same non-oriented electrical steel sheet.

According to Patent Literature 1, a thin non-oriented electrical steel sheet with a sheet thickness of 0.15 to 0.35 mm that has a chemical composition of a high alloy containing, in mass%, C: 0.0050% or less, Si: 2.0% or more 4.0% or less, Mn: 0.05% or more 2.0% or less, Al: 3.0% or less, Ti: 0.0030% or less, S: 0.0030% or less, N: 0.0030% or less, V: 0.0050% or less, Nb: 0.0050% or less, Zr: 0.0050% or less, and As: 0.0050% or less, with the balance being Fe and unavoidable impurities is produced. Then, a rotor and a stator are punched from the same non-oriented electrical steel sheet. Only the punched stator is heat-treated, and the punched rotor is not heat-treated.

According to Patent Literature 1, excellent iron loss, and the high strength required for a rotor core are obtained by making the non-oriented electrical steel sheet a highly alloyed steel sheet. Further, iron loss of the stator core is further reduced by performing a heat treatment on the stator core produced by being punched from the highly alloyed and thin non-oriented electrical steel sheet. An attempt has been made using the above technique to achieve both high strength in a rotor core and low iron loss in a stator that are produced from the same non-oriented electrical steel sheet.

### CITATION LIST

### PATENT LITERATURE

Patent Literature 1: Japanese Patent Application Publication No. 2008-050686

### SUMMARY OF INVENTION

### TECHNICAL PROBLEM

As described above, there is a need for motors to have higher strength in the rotor core and lower iron loss in the stator core. There is also a need to increase the torque of motors. Magnetic flux density is a motive force for generating torque. Therefore, the non-oriented electrical steel sheet that is the starting material is also required to have excellent magnetic flux density.

In the aforementioned Patent Literature 1, a thin non-oriented electrical steel sheet is made a highly alloyed steel sheet. In this case, iron loss can certainly be reduced while also securing strength. However, in the case of a highly alloyed and thin non-oriented electrical steel sheet, sufficient magnetic flux density may not be obtained in some cases.

An objective of the present invention is to provide a non-oriented electrical steel sheet, a rotor core, a stator core, and a motor, in which high strength and excellent magnetic flux density are obtained, and furthermore, excellent iron loss is also obtained.

### SOLUTION TO PROBLEM

In a non-oriented electrical steel sheet according to the present disclosure, a chemical composition consists of, in mass%, Si: 2.0 to 4.0%, Mn: 0.1 to 1.5%, P: 0.15% or less, S: 0.0030% or less, Al: 0.1 to 2.0%, C: 0.0050% or less, N: 0.0050% or less, O: 0.0500% or less, Cr: 0 to 0.50%, Ti: 0 to 0.0030%, Mo: 0 to 0.100%, Ni: 0 to 0.50%, Cu: 0 to 0.50%, Sn: 0 to 0.100%, Sb: 0 to 0.100%, Ca: 0 to 0.0050%, Mg: 0 to 0.0030%, rare earth metal: 0 to 0.0100%, B: 0 to 0.0030%, Zn: 0 to 0.0030%, Ge: 0 to 0.0030%, As: 0 to 0.0100%, Co: 0 to 0.0500%, V: 0 to 0.0030%, Se: 0 to 0.0030%, Zr: 0 to 0.0030%, Nb: 0 to 0.0030%, Pb: 0 to 0.0030%, and Ga: 0 to 0.0030%, with the balance being Fe and impurities, and a sheet thickness t is 0.30 mm or less. F1 defined by Formula (1) is 10.0 or more, and F2 defined by Formula (2) is 8.5 or less. In addition, F3 defined by Formula (3) is equal to or less than an iron loss W_{5/1000} at a frequency of 1000 Hz and a magnetic flux density of 0.5 T, and F4 defined by Formula (4) is not less than an iron loss W_{10/400} at a frequency of 400 Hz and a magnetic flux density of 1.0 T when the non-oriented electrical steel sheet is heat-treated for one hour at 800°C. $F 1 = 4 Si + 3 Al + 2 Mn$ (1) $F 2 = 2 Si + 3 Al + Mn$ (2) $F 3 = 45 - 12 Si - 5 Al - 2 Mn + 1000 \times t / \left(5+6Si+5Al+3Mn\right)$ (3) $F 4 = 4 + 800 \times t / \left(5+6Si+5Al+3Mn\right)$ (4)

In the formulas, a content in percent by mass of a corresponding element is substituted for each symbol of an element in Formula (1) to Formula (4), and the sheet thickness in units of mm is substituted for t.

A rotor core according to the present disclosure includes a plurality of rotor core starting materials stacked on top of one another. The rotor core starting material is a sheet shape. The rotor core starting material has a chemical composition consisting of, in mass%, Si: 2.0 to 4.0%, Mn: 0.1 to 1.5%, P: 0.15% or less, S: 0.0030% or less, Al: 0.1 to 2.0%, C: 0.0050% or less, N: 0.0050% or less, O: 0.0500% or less, Cr: 0 to 0.50%, Ti: 0 to 0.0030%, Mo: 0 to 0.100%, Ni: 0 to 0.50%, Cu: 0 to 0.50%, Sn: 0 to 0.100%, Sb: 0 to 0.100%, Ca: 0 to 0.0050%, Mg: 0 to 0.0030%, rare earth metal: 0 to 0.0100%, B: 0 to 0.0030%, Zn: 0 to 0.0030%, Ge: 0 to 0.0030%, As: 0 to 0.0100%, Co: 0 to 0.0500%, V: 0 to 0.0030%, Se: 0 to 0.0030%, Zr: 0 to 0.0030%, Nb: 0 to 0.0030%, Pb: 0 to 0.0030%, and Ga: 0 to 0.0030%, with the balance being Fe and impurities, and a sheet thickness t is 0.30 mm or less. F1 defined by Formula (1) is 10.0 or more, and F2 defined by Formula (2) is 8.5 or less. In addition, F3 defined by Formula (3) is equal to or less than an iron loss W_{5/1000} at a frequency of 1000 Hz and a magnetic flux density of 0.5 T, and F4 defined by Formula (4) is not less than an iron loss W_{10/400} at a frequency of 400 Hz and a magnetic flux density of 1.0 T when the rotor core starting material is heat-treated for one hour at 800°C. $F 1 = 4 Si + 3 Al + 2 Mn$ (1) $F 2 = 2 Si + 3 Al + Mn$ (2) $F 3 = 45 - 12 Si - 5 Al - 2 Mn + 1000 \times t / \left(5+6Si+5Al+3Mn\right)$ (3) $F 4 = 4 + 800 \times t / \left(5+6Si+5Al+3Mn\right)$ (4)

In the formulas, a content in percent by mass of a corresponding element is substituted for each symbol of an element in Formula (1) to Formula (4), and the sheet thickness in units of mm is substituted for t.

A stator core according to the present disclosure includes a plurality of stator core starting materials stacked on top of one another. The stator core starting material is an annular sheet shape, and the stator core starting material includes a plurality of teeth portions extending in a radial direction of the stator core starting material that are arranged with a gap between each of the teeth portions in a circumferential direction of the stator core starting material. The stator core starting material has a chemical composition consisting of, in mass%, Si: 2.0 to 4.0%, Mn: 0.1 to 1.5%, P: 0.15% or less, S: 0.0030% or less, Al: 0.1 to 2.0%, C: 0.0050% or less, N: 0.0050% or less, O: 0.0500% or less, Cr: 0 to 0.50%, Ti: 0 to 0.0030%, Mo: 0 to 0.100%, Ni: 0 to 0.50%, Cu: 0 to 0.50%, Sn: 0 to 0.100%, Sb: 0 to 0.100%, Ca: 0 to 0.0050%, Mg: 0 to 0.0030%, rare earth metal: 0 to 0.0100%, B: 0 to 0.0030%, Zn: 0 to 0.0030%, Ge: 0 to 0.0030%, As: 0 to 0.0100%, Co: 0 to 0.0500%, V: 0 to 0.0030%, Se: 0 to 0.0030%, Zr: 0 to 0.0030%, Nb: 0 to 0.0030%, Pb: 0 to 0.0030%, and Ga: 0 to 0.0030%, with the balance being Fe and impurities, and a sheet thickness t is 0.30 mm or less. F1 defined by Formula (1) is 10.0 or more, and F2 defined by Formula (2) is 8.5 or less. In addition, F4 defined by Formula (4) is not less than an iron loss W_{10/400} at a frequency of 400 Hz and a magnetic flux density of 1.0 T. $F 1 = 4 Si + 3 Al + 2 Mn$ (1) $F 2 = 2 Si + 3 Al + Mn$ (2) $F 4 = 4 + 800 \times t / \left(5+6Si+5Al+3Mn\right)$ (4)

In the formulas, a content in percent by mass of a corresponding element is substituted for each symbol of an element in Formula (1), Formula (2), and Formula (4), and the sheet thickness in units of mm is substituted for t.

A motor according to the present disclosure includes the rotor core described above and the stator core described above.

### ADVANTAGEOUS EFFECTS OF INVENTION

In the non-oriented electrical steel sheet of the present disclosure, high strength and excellent magnetic flux density are obtained, and furthermore, excellent iron loss is obtained. In the rotor core of the present disclosure, high strength and excellent magnetic flux density are obtained. In the stator core of the present disclosure, excellent magnetic flux density and excellent iron loss are obtained.

### BRIEF DESCRIPTION OF DRAWINGS

[FIG. 1A] FIG. 1A is a plan view illustrating an example of a rotor core of the present embodiment.
[FIG. 1B] FIG. 1B is a plan view illustrating an example of a rotor core of the present embodiment, which is different from FIG. 1A.
[FIG. 1C] FIG. 1C is a plan view illustrating an example of a rotor core of the present embodiment, which is different from FIG. 1A and FIG. 1B.
[FIG. 2A] FIG. 2A is a cross-sectional view along a line segment IIA-IIA of an interlocking part in FIG. 1A.
[FIG. 2B] FIG. 2B is a cross-sectional view along a line segment IIB-IIB of an interlocking part in FIG. 1A.
[FIG. 3] FIG. 3 is a plan view of a stator core of the present embodiment.

### DESCRIPTION OF EMBODIMENTS

The present inventors conducted studies regarding a non-oriented electrical steel sheet in which high strength and excellent magnetic flux density are obtained, and in addition, excellent iron loss is obtained. As described above, in order to obtain excellent magnetic flux density, it is preferable to avoid making the content of alloying elements high. Therefore, first, the present inventors conducted studies from the viewpoint of the chemical composition with respect to a non-oriented electrical steel sheet in which high strength and excellent magnetic flux density are obtained, and furthermore, excellent iron loss is obtained after a heat treatment. As a result, the present inventors have concluded that if a non-oriented electrical steel sheet has a chemical composition consisting of, in mass%, Si: 2.0 to 4.0%, Mn: 0.1 to 1.5%, P: 0.15% or less, S: 0.0030% or less, Al: 0.1 to 2.0%, C: 0.0050% or less, N: 0.0050% or less, O: 0.0500% or less, Cr: 0 to 0.50%, Ti: 0 to 0.0030%, Mo: 0 to 0.100%, Ni: 0 to 0.50%, Cu: 0 to 0.50%, Sn: 0 to 0.100%, Sb: 0 to 0.100%, Ca: 0 to 0.0050%, Mg: 0 to 0.0030%, rare earth metal: 0 to 0.0100%, B: 0 to 0.0030%, Zn: 0 to 0.0030%, Ge: 0 to 0.0030%, As: 0 to 0.0100%, Co: 0 to 0.0500%, V: 0 to 0.0030%, Se: 0 to 0.0030%, Zr: 0 to 0.0030%, Nb: 0 to 0.0030%, Pb: 0 to 0.0030%, and Ga: 0 to 0.0030%, with the balance being Fe and impurities, there is a possibility that high strength and excellent magnetic flux density, and also excellent iron loss after a heat treatment can be obtained.

In addition, the present inventors investigated means for enabling high strength, excellent magnetic flux density, and excellent iron loss to be obtained in a non-oriented electrical steel sheet that satisfies the chemical composition described above.

In the chemical composition described above, Si, Al, and Mn increase the resistivity of the steel sheet and reduce iron loss. On the other hand, Si, Al, and Mn reduce the magnetic flux density. Therefore, the present inventors also investigated the relation between the content of Si, the content of Al, and the content of Mn in a steel sheet satisfying the chemical composition described above, and the iron loss and magnetic flux density of the steel sheet. As a result, the present inventors have discovered that in a non-oriented electrical steel sheet satisfying the chemical composition described above, if F1 defined by Formula (1) is 10.0 or more and F2 defined by Formula (2) is 8.5 or less, there is a possibility that excellent iron loss and excellent magnetic flux density can both be achieved. $F 1 = 4 Si + 3 Al + 2 Mn$ (1) $F 2 = 2 Si + 3 Al + Mn$ (2)

In the formulas, a content in percent by mass of a corresponding element is substituted for each symbol of an element in Formula (1) and Formula (2).

Furthermore, the present inventors conducted studies regarding means for also enabling an increase in strength, and not just achieving excellent iron loss and excellent magnetic flux density in a non-oriented electrical steel sheet satisfying the chemical composition described above and in which F1 is 10.0 or more and F2 is 8.5 or less. In the chemical composition described above, it is not feasible to achieve an increase in strength through alloying elements. Therefore, as means for achieving high strength other than by including a large amount of alloying elements, the present inventors focused on the amount of strain introduced into the steel sheet and the distribution of the strain within the steel sheet. If the amount of strain introduced into the steel sheet and the strain distribution are appropriate, the strength of the steel sheet can be increased without relying on alloying elements. On the other hand, the strain introduced into the steel sheet causes the iron loss to deteriorate. However, if strain can be removed by heat treatment, and that strain can be used as a driving force to reduce the grain boundary area in the steel sheet, iron loss can be further reduced.

It is extremely difficult to quantitatively express the amount of strain and the distribution of strain in a steel sheet. Therefore, the present inventors investigated indexes that correlate with the amount of strain and the distribution of strain. As a result, the present inventors have discovered that if F3 defined by Formula (3) is equal to or less than an iron loss W_{5/1000} at a frequency of 1000 Hz and a magnetic flux density of 0.5 T, and F4 defined by Formula (4) is not less than an iron loss W_{10/400} at a frequency of 400 Hz and a magnetic flux density of 1.0 T when the non-oriented electrical steel sheet has been subjected to strain relief annealing, high strength and excellent magnetic flux density are obtained, and furthermore, excellent iron loss is obtained after the heat treatment. $F 3 = 45 - 12 Si - 5 Al - 2 Mn + 1000 \times t / \left(5+6Si+5Al+3Mn\right)$ (3) $F 4 = 4 + 800 \times t / \left(5+6Si+5Al+3Mn\right)$ (4)

In the formulas, a content in percent by mass of a corresponding element is substituted for each symbol of an element in Formula (3) and Formula (4), and the sheet thickness in units of mm is substituted for t.

A non-oriented electrical steel sheet, a rotor core, a stator core, and a motor of the present embodiment, which have been completed based on the findings described above, are as follows.

In a non-oriented electrical steel sheet of a first aspect, a chemical composition consists of, in mass%, Si: 2.0 to 4.0%, Mn: 0.1 to 1.5%, P: 0.15% or less, S: 0.0030% or less, Al: 0.1 to 2.0%, C: 0.0050% or less, N: 0.0050% or less, O: 0.0500% or less, Cr: 0 to 0.50%, Ti: 0 to 0.0030%, Mo: 0 to 0.100%, Ni: 0 to 0.50%, Cu: 0 to 0.50%, Sn: 0 to 0.100%, Sb: 0 to 0.100%, Ca: 0 to 0.0050%, Mg: 0 to 0.0030%, rare earth metal: 0 to 0.0100%, B: 0 to 0.0030%, Zn: 0 to 0.0030%, Ge: 0 to 0.0030%, As: 0 to 0.0100%, Co: 0 to 0.0500%, V: 0 to 0.0030%, Se: 0 to 0.0030%, Zr: 0 to 0.0030%, Nb: 0 to 0.0030%, Pb: 0 to 0.0030%, and Ga: 0 to 0.0030%, with the balance being Fe and impurities, and a sheet thickness t is 0.30 mm or less. F1 defined by Formula (1) is 10.0 or more, and F2 defined by Formula (2) is 8.5 or less. In addition, F3 defined by Formula (3) is equal to or less than an iron loss W_{5/1000} at a frequency of 1000 Hz and a magnetic flux density of 0.5 T, and F4 defined by Formula (4) is not less than an iron loss W_{10/400} at a frequency of 400 Hz and a magnetic flux density of 1.0 T when the non-oriented electrical steel sheet is heat-treated for one hour at 800°C. $F 1 = 4 Si + 3 Al + 2 Mn$ (1) $F 2 = 2 Si + 3 Al + Mn$ (2) $F 3 = 45 - 12 Si - 5 Al - 2 Mn + 1000 \times t / \left(5+6Si+5Al+3Mn\right)$ (3) $F 4 = 4 + 800 \times t / \left(5+6Si+5Al+3Mn\right)$ (4)

In the formulas, a content in percent by mass of a corresponding element is substituted for each symbol of an element in Formula (1) to Formula (4), and the sheet thickness in units of mm is substituted for t.

A non-oriented electrical steel sheet of a second aspect is in accordance with the non-oriented electrical steel sheet of the first aspect, wherein the chemical composition contains one or more types of element selected from a group consisting of Cr: 0.01 to 0.50%, Ti: 0.0001 to 0.0030%, Mo: 0.001 to 0.100%, Ni: 0.01 to 0.50%, Cu: 0.01 to 0.50%, Sn: 0.001 to 0.100%, Sb: 0.001 to 0.100%, Ca: 0.0001 to 0.0050%, Mg: 0.0001 to 0.0030%, rare earth metal: 0.0001 to 0.0100%, B: 0.0001 to 0.0030%, Zn: 0.0001 to 0.0030%, Ge: 0.0001 to 0.0030%, As: 0.0001 to 0.0100%, Co: 0.0001 to 0.0500%, V: 0.0001 to 0.0030%, Se: 0.0001 to 0.0030%, Zr: 0.0001 to 0.0030%, Nb: 0.0001 to 0.0030%, Pb: 0.0001 to 0.0030%, and Ga: 0.0001 to 0.0030%.

A non-oriented electrical steel sheet of a third aspect is in accordance with the non-oriented electrical steel sheet of the first or second aspect, wherein a yield stress is 450 MPa or more, and a breaking elongation is 20% or more.

A non-oriented electrical steel sheet of a fourth aspect is in accordance with the non-oriented electrical steel sheet of any one of the first to third aspects, wherein, when a rolling direction is designated as a reference 0° and a magnetic flux density B₅₀ in directions of respective angles at intervals of 22.5° is designated as B₅₀(0°), B₅₀(22.5°), B₅₀(45°), B₅₀(67.5°), and B₅₀(90°), respectively, an average magnetic flux density B₅₀ₐᵥₑ defined by Formula (5) is 1.65 T or more. ${B}_{50 ave} = \left({B}_{50}\left(0°\right)+2\times {B}_{50}\left(22.5°\right)+2\times {B}_{50}\left(45°\right)+2\times {B}_{50}\left(67.5°\right)+{B}_{50}\left(90°\right)\right) / 8$ (5)

A non-oriented electrical steel sheet of a fifth aspect is in accordance with the non-oriented electrical steel sheet of any one of the first to fourth aspects, wherein, when the non-oriented electrical steel sheet is heat-treated for one hour at 800°C, an iron loss W_{10/400} is equal to or less than F4. In addition, when a rolling direction is designated as a reference 0° and a magnetic flux density B₁ in directions of respective angles at intervals of 22.5° is designated as B₁(0°), B₁(22.5°), B₁(45°), Bi(67.5°), and B₁(90°), respectively, an average magnetic flux density B₁ₐᵥₑ defined by Formula (6) is 0.70 T or more. Further, when a direction of a maximum value of a magnetic flux density B₅₀₀ is designated as a reference 0° and the magnetic flux density B₅₀₀ in directions of respective angles at intervals of 22.5° is designated as B₅₀₀(0°), B₅₀₀(22.5°), B₅₀₀(45°), B₅₀(67.5°), and B₅₀₀(90°), respectively, an average magnetic flux density B₅₀₀ₐᵥₑ defined by Formula (7) is 1.98 T or more. ${B}_{1 ave} = \left({B}_{1}\left(0°\right)+2\times {B}_{1}\left(22.5°\right)+2\times {B}_{1}\left(45°\right)+2\times {B}_{1}\left(67.5°\right)+{B}_{1}\left(90°\right)\right) / 8$ (6) ${B}_{500 ave} = \left({B}_{500}\left(0°\right)+2\times {B}_{500}\left(22.5°\right)+2\times {B}_{500}\left(45°\right)+2\times {B}_{500}\left(67.5°\right)+{B}_{500}\left(90°\right)\right) / 8$ (7)

A non-oriented electrical steel sheet of a sixth aspect is in accordance with the non-oriented electrical steel sheet of any one of the first to fifth aspects, wherein a thermal conductivity at 20°C is 20 W/mK or more, and the thermal conductivity at 150°C is 23 W/mK or more.

A rotor core of a first aspect includes a plurality of rotor core starting materials stacked on top of one another. The rotor core starting material is a sheet shape. In the rotor core starting material, a chemical composition consists of, in mass%, Si: 2.0 to 4.0%, Mn: 0.1 to 1.5%, P: 0.15% or less, S: 0.0030% or less, Al: 0.1 to 2.0%, C: 0.0050% or less, N: 0.0050% or less, O: 0.0500% or less, Cr: 0 to 0.50%, Ti: 0 to 0.0030%, Mo: 0 to 0.100%, Ni: 0 to 0.50%, Cu: 0 to 0.50%, Sn: 0 to 0.100%, Sb: 0 to 0.100%, Ca: 0 to 0.0050%, Mg: 0 to 0.0030%, rare earth metal: 0 to 0.0100%, B: 0 to 0.0030%, Zn: 0 to 0.0030%, Ge: 0 to 0.0030%, As: 0 to 0.0100%, Co: 0 to 0.0500%, V: 0 to 0.0030%, Se: 0 to 0.0030%, Zr: 0 to 0.0030%, Nb: 0 to 0.0030%, Pb: 0 to 0.0030%, and Ga: 0 to 0.0030%, with the balance being Fe and impurities, and a sheet thickness t is 0.30 mm or less. F1 defined by Formula (1) is 10.0 or more, and F2 defined by Formula (2) is 8.5 or less. In addition, F3 defined by Formula (3) is equal to or less than an iron loss W_{5/1000} at a frequency of 1000 Hz and a magnetic flux density of 0.5 T, and F4 defined by Formula (4) is not less than an iron loss W_{10/400} at a frequency of 400 Hz and a magnetic flux density of 1.0 T when the rotor core starting material is heat-treated for one hour at 800°C. $F 1 = 4 Si + 3 Al + 2 Mn$ (1) $F 2 = 2 Si + 3 Al + Mn$ (2) $F 3 = 45 - 12 Si - 5 Al - 2 Mn + 1000 \times t / \left(5+6Si+5Al+3Mn\right)$ (3) $F 4 = 4 + 800 \times t / \left(5+6Si+5Al+3Mn\right)$ (4)

In the formulas, a content in percent by mass of a corresponding element is substituted for each symbol of an element in Formula (1) to Formula (4), and the sheet thickness in units of mm is substituted for t.

A rotor core of a second aspect is in accordance with the rotor core of the first aspect, wherein the rotor core starting material further includes an interlocking part, and a flat portion that is a flat region. The interlocking part includes an inclined portion that is formed to be inclined with respect to the flat portion. A sheet thickness of the inclined portion is equal to or less than 85% of a sheet thickness of the flat portion.

A rotor core of a third aspect is in accordance with the rotor core of the second aspect, wherein, in a cross section including a central axis of the rotor core starting material, a Vickers hardness H₁₄ at a center position of the sheet thickness of the flat portion is 180 HV or more, and a Vickers hardness H₁₂₁ at a center position of the sheet thickness of the inclined portion is H₁₄ + 40 HV or more.

A stator core of a first aspect includes a plurality of stator core starting materials stacked on top of one another. The stator core starting material is an annular sheet shape. The stator core starting material includes a plurality of teeth portions extending in a radial direction of the stator core starting material that are arranged with a gap between each of the teeth portions in a circumferential direction of the stator core starting material. In the stator core starting material, a chemical composition consists of, in mass%, Si: 2.0 to 4.0%, Mn: 0.1 to 1.5%, P: 0.15% or less, S: 0.0030% or less, Al: 0.1 to 2.0%, C: 0.0050% or less, N: 0.0050% or less, O: 0.0500% or less, Cr: 0 to 0.50%, Ti: 0 to 0.0030%, Mo: 0 to 0.100%, Ni: 0 to 0.50%, Cu: 0 to 0.50%, Sn: 0 to 0.100%, Sb: 0 to 0.100%, Ca: 0 to 0.0050%, Mg: 0 to 0.0030%, rare earth metal: 0 to 0.0100%, B: 0 to 0.0030%, Zn: 0 to 0.0030%, Ge: 0 to 0.0030%, As: 0 to 0.0100%, Co: 0 to 0.0500%, V: 0 to 0.0030%, Se: 0 to 0.0030%, Zr: 0 to 0.0030%, Nb: 0 to 0.0030%, Pb: 0 to 0.0030%, and Ga: 0 to 0.0030%, with the balance being Fe and impurities, and a sheet thickness t is 0.30 mm or less. F1 defined by Formula (1) is 10.0 or more, and F2 defined by Formula (2) is 8.5 or less. In addition, F4 defined by Formula (4) is not less than an iron loss W_{10/400} at a frequency of 400 Hz and a magnetic flux density of 1.0 T. $F 1 = 4 Si + 3 Al + 2 Mn$ (1) $F 2 = 2 Si + 3 Al + Mn$ (2) $F 4 = 4 + 800 \times t / \left(5+6Si+5Al+3Mn\right)$ (4)

In the formulas, a content in percent by mass of a corresponding element is substituted for each symbol of an element in Formula (1), Formula (2), and Formula (4), and the sheet thickness in units of mm is substituted for t.

A stator core of a second aspect is in accordance with the stator core of the first aspect, wherein the stator core starting material further includes an interlocking part, and a flat portion that is a flat region. The interlocking part includes an inclined portion that is formed to be inclined with respect to the flat portion. A sheet thickness of the inclined portion is equal to or less than 85% of a sheet thickness of the flat portion.

A stator core of a third aspect is in accordance with the stator core of the second aspect, wherein, in a cross section including a central axis of the stator core starting material, a Vickers hardness H₂₄ at a center position of the sheet thickness of the flat portion is 175 HV or more, and a Vickers hardness H₂₂₁ at a center position of the sheet thickness of the inclined portion is within ± 10 HV of the Vickers hardness H₂₄.

A motor according to a first aspect includes the rotor core according to any one of the first to third aspects, and the stator core according to any one of the first to third aspects.

Hereunder, the non-oriented electrical steel sheet, the rotor core, the stator core, and the motor of the present embodiment are described. Note that, the symbol "%" in relation to the content of an element means "mass percent" unless otherwise noted.

### [Features of non-oriented electrical steel sheet of present embodiment]

The non-oriented electrical steel sheet of the present embodiment satisfies the following feature 1 to feature 5.

### (Feature 1)

The chemical composition consists of, in mass%, Si: 2.0 to 4.0%, Mn: 0.1 to 1.5%, P: 0.15% or less, S: 0.0030% or less, Al: 0.1 to 2.0%, C: 0.0050% or less, N: 0.0050% or less, O: 0.0500% or less, Cr: 0 to 0.50%, Ti: 0 to 0.0030%, Mo: 0 to 0.100%, Ni: 0 to 0.50%, Cu: 0 to 0.50%, Sn: 0 to 0.100%, Sb: 0 to 0.100%, Ca: 0 to 0.0050%, Mg: 0 to 0.0030%, rare earth metal: 0 to 0.0100%, B: 0 to 0.0030%, Zn: 0 to 0.0030%, Ge: 0 to 0.0030%, As: 0 to 0.0100%, Co: 0 to 0.0500%, V: 0 to 0.0030%, Se: 0 to 0.0030%, Zr: 0 to 0.0030%, Nb: 0 to 0.0030%, Pb: 0 to 0.0030%, and Ga: 0 to 0.0030%, with the balance being Fe and impurities.

### (Feature 2)

A sheet thickness t is 0.30 mm or less.

### (Feature 3)

F1 defined by Formula (1) is 10.0 or more. $F 1 = 4 Si + 3 Al + 2 Mn$ (1)

In the formulas, the content in percent by mass of a corresponding element is substituted for each symbol of an element in Formula (1).

### (Feature 4)

F2 defined by Formula (2) is 8.5 or less. $F 2 = 2 Si + 3 Al + Mn$ (2)

In the formulas, the content in percent by mass of a corresponding element is substituted for each symbol of an element in Formula (2).

### (Feature 5)

F3 defined by Formula (3) is equal to or less than an iron loss W_{5/1000} at a frequency of 1000 Hz and a magnetic flux density of 0.5 T, and
F4 defined by Formula (4) is not less than an iron loss W_{10/400} at a frequency of 400 Hz and a magnetic flux density of 1.0 T when the non-oriented electrical steel sheet is heat-treated for one hour at 800°C. $F 3 = 45 - 12 Si - 5 Al - 2 Mn + 1000 \times t / \left(5+6Si+5Al+3Mn\right)$ (3) $F 4 = 4 + 800 \times t / \left(5+6Si+5Al+3Mn\right)$ (4)

In the formulas, the content in percent by mass of a corresponding element is substituted for each symbol of an element in Formula (3) and Formula (4), and the sheet thickness in units of mm is substituted for t.

Feature 1 to feature 5 are described hereunder.

### [(Feature 1) Regarding chemical composition]

The chemical composition of the non-oriented electrical steel sheet of the present embodiment contains the following elements. Note that, the symbol "%" in the chemical composition of the non-oriented electrical steel sheet means "mass percent" unless specifically stated otherwise.

### Si: 2.0 to 4.0%

Silicon (Si) increases the resistivity of the steel sheet and reduces eddy-current loss. As a result, the iron loss of the steel sheet decreases. Si also dissolves in the steel sheet and thereby increases the strength of the steel sheet. If the content of Si is less than 2.0%, the aforementioned advantageous effects will not be sufficiently obtained even if the contents of other elements are within the range of the present embodiment.

On the other hand, if the content of Si is more than 4.0%, even if the contents of other elements are within the range of the present embodiment, the punching workability of the non-oriented electrical steel sheet will decrease.

Therefore, the content of Si is 2.0 to 4.0%.

A preferable lower limit of the content of Si is 2.1%, more preferably is 2.2%, further preferably is 2.3%, further preferably is 2.5%, and further preferably is 2.8%.

A preferable upper limit of the content of Si is 3.7%, more preferably is 3.6%, further preferably is 3.5%, and further preferably is 3.2%.

### Mn: 0.1 to 1.5%

Manganese (Mn) increases the resistivity of the steel sheet and reduces eddy-current loss. As a result, the iron loss of the steel sheet decreases. If the content of Mn is less than 0.1%, the aforementioned advantageous effects will not be sufficiently obtained even if the contents of other elements are within the range of the present embodiment.

On the other hand, if the content of Mn is more than 1.5%, the magnetic flux density of the steel sheet will decrease even if the contents of other elements are within the range of the present embodiment.

Therefore, the content of Mn is 0.1 to 1.5%.

A preferable lower limit of the content of Mn is 0.2%, more preferably is 0.3%, and further preferably is 0.4%.

A preferable upper limit of the content of Mn is 1.0%, more preferably is 0.8%, further preferably is 0.7%, and further preferably is 0.6%.

### P: 0.15% or less

Phosphorus (P) is unavoidably contained. That is, the content of P is more than 0%. P increases the strength of the steel sheet by solid-solution strengthening. If even a small amount of P is contained, the aforementioned advantageous effect will be obtained to a certain extent.

However, if the content of P is more than 0.15%, even if the contents of other elements are within the range of the present embodiment, the steel sheet will become brittle and workability will decrease and cracks may occur in the steel sheet during cold rolling. Therefore, the content of P is 0.15% or less.

A preferable lower limit of the content of P is 0.01%, and more preferably is 0.03%.

A preferable upper limit of the content of P is 0.12%, more preferably is 0.10%, and further preferably is 0.08%.

### S: 0.0030% or less

Sulfur (S) is an impurity that is unavoidably contained. That is, the content of S is more than 0%. If the content of S is more than 0.0030%, even if the contents of other elements are within the range of the present embodiment, S will excessively form sulfides such as MnS. These sulfides will cause the iron loss and the magnetic flux density of the steel sheet to deteriorate. Therefore, the content of S is 0.0030% or less.

The content of S is preferably as low as possible. However, if the content of S is excessively reduced, the production cost will increase. Therefore, from the viewpoint of industrial productivity, a preferable lower limit of the content of S is more than 0.0001%, more preferably is 0.0003%, further preferably is 0.0004%, and further preferably is 0.0005%.

A preferable upper limit of the content of S is 0.0020%, more preferably is 0.0018%, further preferably is 0.0017%, further preferably is 0.0015%, further preferably is 0.0010%, and further preferably is 0.0008%.

### Al: 0.1 to 2.0%

Aluminum (Al) increases the resistivity of the steel sheet and reduces eddy-current loss. As a result, the iron loss of the steel sheet decreases. If the content of Al is less than 0.1%, the aforementioned advantageous effect will not be sufficiently obtained even if the contents of other elements are within the range of the present embodiment.

On the other hand, if the content of Al is more than 2.0%, the magnetic flux density of the steel will decrease even if the contents of other elements are within the range of the present embodiment.

Therefore, the content of Al is 0.1 to 2.0%.

A preferable lower limit of the content of Al is 0.2%, more preferably is 0.3%, and further preferably is 0.4%.

A preferable upper limit of the content of Al is 1.8%, more preferably is 1.6%, and further preferably is 1.4%.

In the present description, the phrase "content of Al" in the chemical composition of the non-oriented electrical steel sheet means the content of acid-soluble Al (sol. Al).

### C: 0.0050% or less

Carbon (C) adheres to dislocations in the steel sheet and thereby increases the strength of the steel sheet. If even a small amount of C is contained, the aforementioned advantageous effect will be obtained to a certain extent.

However, if the content of C is more than 0.0050%, even if the contents of other elements are within the range of the present embodiment, carbides will excessively form and thereby cause the iron loss and magnetic flux density of the steel sheet to deteriorate.

Therefore, the content of C is 0.0050% or less.

A preferable lower limit of the content of C is more than 0%, more preferably is 0.0001%, further preferably is more than 0.0001%, further preferably is 0.0005%, further preferably is 0.0008%, and further preferably is 0.0010%.

A preferable upper limit of the content of C is 0.0040%, more preferably is 0.0036%, further preferably is 0.0030%, further preferably is 0.0025%, and further preferably is 0.0020%.

### N: 0.0050% or less

Nitrogen (N) is an impurity that is unavoidably contained. That is, the content of N is more than 0%. If the content of N is more than 0.0050%, even if the contents of other elements are within the range of the present embodiment, N will excessively form nitrides in the steel sheet, and thereby cause the iron loss and the magnetic flux density of the steel sheet to deteriorate.

Therefore, the content of N is 0.0050% or less.

N is preferably as low as possible. However, if the content of N is excessively reduced, the production cost will increase. Therefore, from the viewpoint of industrial productivity, a preferable lower limit of the content of N is 0.0001%, more preferably is 0.0005%, further preferably is 0.0010%, further preferably is 0.0013%, and further preferably is 0.0015%.

A preferable upper limit of the content of N is 0.0040%, more preferably is 0.0030%, and further preferably is 0.0025%.

### O: 0.0500% or less

Oxygen (O) is an unavoidable impurity. That is, the content of O is more than 0%. If the content of O is more than 0.0500%, even if the contents of other elements are within the range of the present embodiment, O will excessively form oxides in the steel sheet, thereby causing the iron loss and the magnetic flux density of the steel sheet to deteriorate.

Therefore, the content of O is 0.0500% or less.

O is preferably as low as possible. However, if the content of O is excessively reduced, the production cost will increase. Therefore, from the viewpoint of industrial productivity, a preferable lower limit of the content of O is 0.0001%, more preferably is 0.0005%, further preferably is 0.0010%, and further preferably is 0.0015%.

A preferable upper limit of the content of O is 0.0200%, more preferably is 0.0100%, further preferably is 0.0050%, and further preferably is 0.0030%.

The balance of the chemical composition of the non-oriented electrical steel sheet of the present embodiment is Fe and impurities. Here, the term "impurities" refers to substances which are not intentionally contained but which are mixed in from ore or scrap used as a raw material or from the production environment or the like when industrially producing the non-oriented electrical steel sheet. Contents of these impurities are allowed within a range that does not adversely affect the non-oriented electrical steel sheet of the present embodiment.

### [Optional Elements]

The chemical composition of the non-oriented electrical steel sheet of the present embodiment may further contain, in lieu of a part of Fe, one or more types of element selected from a group consisting of Cr: 0 to 0.50%, Ti: 0 to 0.0030%, Mo: 0 to 0.100%, Ni: 0 to 0.50%, Cu: 0 to 0.50%, Sn: 0 to 0.100%, Sb: 0 to 0.100%, Ca: 0 to 0.0050%, Mg: 0 to 0.0030%, rare earth metal: 0 to 0.0100%, B: 0 to 0.0030%, Zn: 0 to 0.0030%, Ge: 0 to 0.0030%, As: 0 to 0.0100%, Co: 0 to 0.0500%, V: 0 to 0.0030%, Se: 0 to 0.0030%, Zr: 0 to 0.0030%, Nb: 0 to 0.0030%, Pb: 0 to 0.0030%, and Ga: 0 to 0.0030%. These optional elements are described hereunder.

### [First group: Cr]

The chemical composition of the non-oriented electrical steel sheet of the present embodiment may further contain Cr in lieu of a part of Fe.

### Cr: 0 to 0.50%

Chromium (Cr) is an optional element, and does not have to be contained. That is, the content of Cr may be 0%.

When contained, in other words, when the content of Cr is more than 0%, similarly to Si, Cr increases the resistivity of the steel sheet and reduces eddy-current loss. As a result, the iron loss of the steel sheet decreases. If even a small amount of Cr is contained, the aforementioned advantageous effect will be obtained to a certain extent.

However, if the content of Cr is more than 0.50%, the magnetic flux density of the steel sheet will decrease.

Therefore, the content of Cr is 0 to 0.50%.

A preferable lower limit of the content of Cr is 0.01%, more preferably is 0.02%, and further preferably is 0.03%.

A preferable upper limit of the content of Cr is 0.40%, more preferably is 0.35%, further preferably is 0.30%, and further preferably is 0.10%.

### [Second group: Ti, Mo, Ni, and Cu]

The chemical composition of the non-oriented electrical steel sheet of the present embodiment may further contain one or more types of element selected from a group consisting of Ti, Mo, Ni, and Cu in lieu of a part of Fe. These elements are optional elements, and each of these elements increases the strength of the steel sheet. Each element is described hereunder.

### Ti: 0 to 0.0030%

Titanium (Ti) is an optional element, and does not have to be contained. That is, the content of Ti may be 0%.

When Ti is contained, in other words, when the content of Ti is more than 0%, Ti forms carbo-nitrides and increases the strength of the non-oriented electrical steel sheet by precipitation strengthening. If even a small amount of Ti is contained, the aforementioned advantageous effect will be obtained to a certain extent.

However, if the content of Ti is more than 0.0030%, even if the contents of other elements are within the range of the present embodiment, carbo-nitrides will excessively form and the magnetic properties will deteriorate.

Therefore, the content of Ti is 0 to 0.0030%.

A preferable lower limit of the content of Ti is 0.0001%, more preferably is 0.0005%, and further preferably is 0.0010%.

A preferable upper limit of the content of Ti is 0.0025%, more preferably is 0.0020%, and further preferably is 0.0017%.

### Mo: 0 to 0.100%

Molybdenum (Mo) is an optional element, and does not have to be contained. That is, the content of Mo may be 0%.

When Mo is contained, in other words, when the content of Mo is more than 0%, Mo forms carbo-nitrides and increases the strength of the non-oriented electrical steel sheet by precipitation strengthening. If even a small amount of Mo is contained, the aforementioned advantageous effect will be obtained to a certain extent.

However, if the content of Mo is more than 0.100%, even if the contents of other elements are within the range of the present embodiment, carbides will excessively form and the magnetic properties will deteriorate.

Therefore, the content of Mo is 0 to 0.100%.

A preferable lower limit of the content of Mo is 0.001%, more preferably is 0.005%, further preferably is 0.010%, and further preferably is 0.015%.

A preferable upper limit of the content of Mo is 0.090%, more preferably is 0.080%, further preferably is 0.075%, and further preferably is 0.070%.

### Ni: 0 to 0.50%

Nickel (Ni) is an optional element, and does not have to be contained. That is, the content of Ni may be 0%.

When contained, in other words, when the content of Ni is more than 0%, Ni increases the strength of the steel sheet by solid-solution strengthening. If even a small amount of Ni is contained, the aforementioned advantageous effect will be obtained to a certain extent.

However, if the content of Ni is more than 0.50%, even if the contents of other elements are within the range of the present embodiment, the steel sheet will become brittle and workability will decrease.

Therefore, the content of Ni is 0 to 0.50%.

A preferable lower limit of the content of Ni is 0.01%, more preferably is 0.02%, and further preferably is 0.03%.

A preferable upper limit of the content of Ni is 0.35%, more preferably is 0.20%, and further preferably is 0.10%.

### Cu: 0 to 0.50%

Copper (Cu) is an optional element, and does not have to be contained. That is, the content of Cu may be 0%. When contained, Cu increases the strength of the non-oriented electrical steel sheet. If even a small amount of Cu is contained, the aforementioned advantageous effect will be obtained to a certain extent. However, if the content of Cu is more than 0.50%, the steel sheet will become brittle and workability will decrease.

Therefore, the content of Cu is 0 to 0.50%.

A preferable lower limit of the content of Cu is 0.01%, more preferably is 0.02%, and further preferably is 0.03%.

A preferable upper limit of the content of Cu is 0.30%, more preferably is 0.20%, further preferably is 0.15%, and further preferably is 0.10%.

### [Third group: Sn, Sb, Ca, Mg, and rare earth metal (REM)]

The chemical composition of the non-oriented electrical steel sheet of the present embodiment may further contain one or more types of element selected from a group consisting of Sn, Sb, Ca, Mg, and rare earth metal (REM) in lieu of a part of Fe. These elements are optional elements, and each of these elements enhances the magnetic properties of the steel sheet. Each element is described hereunder.

### Sn: 0 to 0.100%

Tin (Sn) is an optional element, and does not have to be contained. That is, the content of Sn may be 0%.

When contained, in other words, when the content of Sn is more than 0%, Sn segregates to the surface of the steel sheet and suppresses oxidation and nitriding during final annealing. As a result, the iron loss of the non-oriented electrical steel sheet decreases. In addition, Sn improves the texture of the steel sheet and thereby increases the magnetic flux density. If even a small amount of Sn is contained, the aforementioned advantageous effects will be obtained to a certain extent.

However, if the content of Sn is more than 0.100%, the steel sheet will become brittle and workability will decrease even if the contents of other elements are within the range of the present embodiment.

Therefore, the content of Sn is 0 to 0.100%.

A preferable lower limit of the content of Sn is 0.001%, more preferably is 0.005%, and further preferably is 0.010%.

A preferable upper limit of the content of Sn is 0.080%, more preferably is 0.070%, and further preferably is 0.060%.

### Sb: 0 to 0.100%

Antimony (Sb) is an optional element, and does not have to be contained. That is, the content of Sb may be 0%.

When contained, in other words, when the content of Sb is more than 0%, Sb segregates to the surface of the steel sheet and suppresses oxidation and nitriding during final annealing. As a result, the iron loss of the non-oriented electrical steel sheet decreases. In addition, Sb improves the texture of the steel sheet and thereby increases the magnetic flux density. If even a small amount of Sb is contained, the aforementioned advantageous effects will be obtained to a certain extent.

However, if the content of Sb is more than 0.100%, the steel sheet will become brittle and workability will decrease even if the contents of other elements are within the range of the present embodiment.

Therefore, the content of Sb is 0 to 0.100%.

A preferable lower limit of the content of Sb is 0.001%, more preferably is 0.003%, further preferably is 0.005%, and further preferably is 0.010%.

A preferable upper limit of the content of Sb is 0.080%, more preferably is 0.070%, further preferably is 0.060%, further preferably is 0.040%, further preferably is 0.030%, and further preferably is 0.020%.

### Ca: 0 to 0.0050%

Calcium (Ca) is an optional element, and does not have to be contained. That is, the content of Ca may be 0%.

When contained, in other words, when the content of Ca is more than 0%, Ca combines with S during casting of the molten steel and forms coarse precipitates that are coarse sulfides and/or coarse oxysulfides. The coarse sulfides adsorb fine inhibitors such as MnS, TiN, and AlN that have a grain size of approximately 100 nm which are formed in the steel sheet during the production process from the casting process onward. By this means, inhibition of grain growth by inhibitors is suppressed during final annealing. Consequently, the growth of grains is promoted during final annealing. As a result, the magnetic properties of the non-oriented electrical steel sheet are enhanced. If even a small amount of Ca is contained, the aforementioned advantageous effect will be obtained to a certain extent.

However, if the content of Ca is more than 0.0050%, coarse precipitates will excessively form even if the contents of other elements are within the range of the present embodiment. In such case, recrystallization and the growth of grains will be inhibited during the final annealing process.

Therefore, the content of Ca is 0 to 0.0050%.

A preferable lower limit of the content of Ca is 0.0001%, more preferably is 0.0005%, and further preferably is 0.0010%.

A preferable upper limit of the content of Ca is 0.0040%, more preferably is 0.0035%, further preferably is 0.0030%, and further preferably is 0.0025%.

### Mg: 0 to 0.0030%

Magnesium (Mg) is an optional element, and does not have to be contained. That is, the content of Mg may be 0%.

When contained, in other words, when the content of Mg is more than 0%, similarly to Ca, Mg forms coarse precipitates and thereby suppresses inhibition of the growth of grains by inhibitors during final annealing. Consequently, the growth of grains is promoted during final annealing. As a result, the magnetic properties of the non-oriented electrical steel sheet are enhanced. If even a small amount of Mg is contained, the aforementioned advantageous effect will be obtained to a certain extent.

However, if the content of Mg is more than 0.0030%, even if the contents of other elements are within the range of the present embodiment, coarse precipitates will excessively form. In such case, recrystallization and the growth of grains will, on the contrary, be inhibited during the final annealing process.

Therefore, the content of Mg is 0 to 0.0030%.

A preferable lower limit of the content of Mg is 0.0001%, more preferably is 0.0002%, and further preferably is 0.0003%.

A preferable upper limit of the content of Mg is 0.0020%, more preferably is 0.0015%, and further preferably is 0.0010%.

### Rare earth metal (REM): 0 to 0.0100%

Rare earth metal (REM) is an optional element, and does not have to be contained. That is, the content of REM may be 0%.

When contained, in other words, when the content of REM is more than 0%, similarly to Ca, REM forms coarse precipitates and thereby suppresses inhibition of the growth of grains by inhibitors during final annealing. Consequently, the growth of grains is promoted during final annealing. As a result, the magnetic properties of the non-oriented electrical steel sheet are enhanced. If even a small amount of REM is contained, the aforementioned advantageous effect will be obtained to a certain extent.

However, if the content of REM is more than 0.0100%, even if the contents of other elements are within the range of the present embodiment, coarse precipitates will excessively form. In such case, recrystallization and the growth of grains will, on the contrary, be inhibited during the final annealing process.

Therefore, the content of REM is 0 to 0.0100%.

A preferable lower limit of the content of REM is 0.0001%, more preferably is 0.0005%, and further preferably is 0.0010%.

A preferable upper limit of the content of REM is 0.0050%, more preferably is 0.0045%, further preferably is 0.0040%, and further preferably is 0.0030%.

Note that, in the present description the term "REM" means one element or more selected from the group consisting of scandium (Sc) which is the element with atomic number 21, yttrium (Y) which is the element with atomic number 39, and the elements from lanthanum (La) with atomic number 57 to lutetium (Lu) with atomic number 71 that are lanthanoids. Further, in the present description, the term "content of REM" means the total content of these elements.

### [Fourth group: B]

The chemical composition of the non-oriented electrical steel sheet of the present embodiment may further contain B in lieu of a part of Fe.

### B: 0 to 0.0030%

Boron (B) is an optional element, and does not have to be contained. That is, the content of B may be 0%.

When contained, in other words, when the content of B is more than 0%, B forms nitrides and inhibits recrystallization during final annealing.

Therefore, the content of B is 0 to 0.0030%.

Excessively reducing the content of B will increase the production cost. Therefore, from the viewpoint of industrial productivity, a preferable lower limit of the content of B is 0.0001%, more preferably is 0.0002%, and further preferably is 0.0003%.

A preferable upper limit of the content of B is 0.0020%, more preferably is 0.0015%, further preferably is 0.0010%, and further preferably is 0.0007%.

### [Fifth group: Zn, Ge, As, and Co]

The chemical composition of the non-oriented electrical steel sheet of the present embodiment may further contain one or more types of element selected from a group consisting of Zn, Ge, As, and Co in lieu of a part of Fe. These elements are optional elements, and each of these elements reduces the iron loss of the non-oriented electrical steel sheet. Each element is described hereunder.

### Zn: 0 to 0.0030%

Zinc (Zn) is an optional element, and does not have to be contained. That is, the content of Zn may be 0%.

When contained, in other words, when the content of Zn is more than 0%, Zn suppresses formation of oxides and sulfides and thereby reduces the iron loss of the non-oriented electrical steel sheet. If even a small amount of Zn is contained, the aforementioned advantageous effect will be obtained to a certain extent.

However, if the content of Zn is more than 0.0030%, the aforementioned advantageous effect will be saturated even if the contents of other elements are within the range of the present embodiment.

Therefore, the content of Zn is 0 to 0.0030%.

A preferable lower limit of the content of Zn is 0.0001%, more preferably is 0.0003%, and further preferably is 0.0005%.

A preferable upper limit of the content of Zn is 0.0025%, more preferably is 0.0020%, and further preferably is 0.0015%.

### Ge: 0 to 0.0030%

Germanium (Ge) is an optional element, and does not have to be contained. That is, the content of Ge may be 0%.

When contained, in other words, when the content of Ge is more than 0%, Ge reduces the iron loss of the non-oriented electrical steel sheet. Ge also increases the magnetic flux density. If even a small amount of Ge is contained, the aforementioned advantageous effects will be obtained to a certain extent.

However, if the content of Ge is more than 0.0030%, the aforementioned advantageous effects will be saturated even if the contents of other elements are within the range of the present embodiment.

Therefore, the content of Ge is 0 to 0.0030%.

A preferable lower limit of the content of Ge is 0.0001%, more preferably is 0.0003%, and further preferably is 0.0005%.

A preferable upper limit of the content of Ge is 0.0025%, more preferably is 0.0020%, and further preferably is 0.0015%.

### As: 0 to 0.0100%

Arsenic (As) is an optional element, and does not have to be contained. That is, the content of As may be 0%.

When contained, in other words, when the content of As is more than 0%, As reduces the iron loss of the non-oriented electrical steel sheet. As also increases the magnetic flux density. If even a small amount of As is contained, the aforementioned advantageous effects will be obtained to a certain extent.

However, if the content of As is more than 0.0100%, the aforementioned advantageous effects will be saturated even if the contents of other elements are within the range of the present embodiment.

Therefore, the content of As is 0 to 0.0100%.

A preferable lower limit of the content of As is 0.0001%, more preferably is 0.0005%, and further preferably is 0.0010%.

A preferable upper limit of the content of As is 0.0080%, more preferably is 0.0060%, further preferably is 0.0045%, and further preferably is 0.0040%.

### Co: 0 to 0.0500%

Cobalt (Co) is an optional element, and does not have to be contained. That is, the content of Co may be 0%.

When contained, in other words, when the content of Co is more than 0%, Co reduces the iron loss of the non-oriented electrical steel sheet. Co also increases the magnetic flux density. If even a small amount of Co is contained, the aforementioned advantageous effects will be obtained to a certain extent.

However, if the content of Co is more than 0.0500%, the aforementioned advantageous effects will be saturated even if the contents of other elements are within the range of the present embodiment.

Therefore, the content of Co is 0 to 0.0500%.

A preferable lower limit of the content of Co is 0.0001%, and more preferably is 0.0010%.

A preferable upper limit of the content of Co is 0.0400%, more preferably is 0.0300%, further preferably is 0.0200%, further preferably is 0.0100%, and further preferably is 0.0065%.

### [Sixth group: V, Se, Zr, Nb, Pb, and Ga]

The chemical composition of the non-oriented electrical steel sheet of the present embodiment may further contain one or more types of element selected from a group consisting of V, Se, Zr, Nb, Pb, and Ga in lieu of a part of Fe. These elements are impurities and cause the iron loss to deteriorate. Each element is described hereunder.

### V: 0 to 0.0030%

Vanadium (V) is an impurity, and does not have to be contained. That is, the content of V may be 0%.

When contained, in other words, when the content of V is more than 0%, V forms fine precipitates, thereby causing the iron loss of the non-oriented electrical steel sheet to deteriorate. If the content of V is more than 0.0030%, the iron loss of the non-oriented electrical steel sheet will markedly deteriorate even if the contents of other elements are within the range of the present embodiment.

Therefore, the content of V is 0 to 0.0030%.

The content of V is preferably as low as possible. However, excessively reducing the content of V will increase the production cost. Therefore, when ordinary industrial production is taken into consideration, a preferable lower limit of the content of V is 0.0001%, more preferably is 0.0003%, and further preferably is 0.0005%.

A preferable upper limit of the content of V is 0.0025%, more preferably is 0.0020%, and further preferably is 0.0015%.

### Se: 0 to 0.0030%

Selenium (Se) is an impurity, and does not have to be contained. That is, the content of Se may be 0%.

When contained, in other words, when the content of Se is more than 0%, Se forms fine precipitates, thereby causing the iron loss of the non-oriented electrical steel sheet to deteriorate. If the content of Se is more than 0.0030%, the iron loss of the non-oriented electrical steel sheet will markedly deteriorate even if the contents of other elements are within the range of the present embodiment.

Therefore, the content of Se is 0 to 0.0030%.

The content of Se is preferably as low as possible. However, excessively reducing the content of Se will increase the production cost. Therefore, when ordinary industrial production is taken into consideration, a preferable lower limit of the content of Se is 0.0001%, more preferably is 0.0003%, and further preferably is 0.0005%.

A preferable upper limit of the content of Se is 0.0025%, more preferably is 0.0020%, and further preferably is 0.0015%.

### Zr: 0 to 0.0030%

Zirconium (Zr) is an impurity, and does not have to be contained. That is, the content of Zr may be 0%.

When contained, in other words, when the content of Zr is more than 0%, Zr forms fine precipitates, thereby causing the iron loss of the non-oriented electrical steel sheet to deteriorate. If the content of Zr is more than 0.0030%, the iron loss of the non-oriented electrical steel sheet will markedly deteriorate even if the contents of other elements are within the range of the present embodiment.

Therefore, the content of Zr is 0 to 0.0030%.

The content of Zr is preferably as low as possible. However, excessively reducing the content of Zr will increase the production cost. Therefore, when ordinary industrial production is taken into consideration, a preferable lower limit of the content of Zr is 0.0001%, more preferably is 0.0003%, and further preferably is 0.0005%.

A preferable upper limit of the content of Zr is 0.0025%, more preferably is 0.0020%, and further preferably is 0.0015%.

### Nb: 0 to 0.0030%

Niobium (Nb) is an impurity, and does not have to be contained. That is, the content of Nb may be 0%.

When contained, in other words, when the content of Nb is more than 0%, Nb forms fine precipitates, thereby causing the iron loss of the non-oriented electrical steel sheet to deteriorate. If the content of Nb is more than 0.0030%, the iron loss of the non-oriented electrical steel sheet will markedly deteriorate even if the contents of other elements are within the range of the present embodiment.

Therefore, the content of Nb is 0 to 0.0030%.

The content of Nb is preferably as low as possible. However, excessively reducing the content of Nb will increase the production cost. Therefore, when ordinary industrial production is taken into consideration, a preferable lower limit of the content of Nb is 0.0001%, more preferably is 0.0003%, and further preferably is 0.0005%.

A preferable upper limit of the content of Nb is 0.0025%, more preferably is 0.0020%, and further preferably is 0.0015%.

### Pb: 0 to 0.0030%

Lead (Pb) is an impurity, and does not have to be contained. That is, the content of Pb may be 0%.

When contained, in other words, when the content of Pb is more than 0%, Pb forms fine Pb particles, thereby causing the iron loss of the non-oriented electrical steel sheet to deteriorate. If the content of Pb is more than 0.0030%, the iron loss of the non-oriented electrical steel sheet will markedly deteriorate even if the contents of other elements are within the range of the present embodiment.

Therefore, the content of Pb is 0 to 0.0030%.

The content of Pb is preferably as low as possible. However, excessively reducing the content of Pb will increase the production cost. Therefore, when ordinary industrial production is taken into consideration, a preferable lower limit of the content of Pb is 0.0001%, more preferably is 0.0003%, and further preferably is 0.0005%.

A preferable upper limit of the content of Pb is 0.0025%, more preferably is 0.0020%, and further preferably is 0.0015%.

### Ga: 0 to 0.0030%

Gallium (Ga) is an impurity, and does not have to be contained. That is, the content of Ga may be 0%.

When contained, in other words, when the content of Ga is more than 0%, Ga forms fine precipitates, thereby causing the iron loss of the non-oriented electrical steel sheet to deteriorate. If the content of Ga is more than 0.0030%, the iron loss of the non-oriented electrical steel sheet will markedly deteriorate even if the contents of other elements are within the range of the present embodiment.

Therefore, the content of Ga is 0 to 0.0030%.

The content of Ga is preferably as low as possible. However, excessively reducing the content of Ga will increase the production cost. Therefore, when ordinary industrial production is taken into consideration, a preferable lower limit of the content of Ga is 0.0001%, more preferably is 0.0003%, and further preferably is 0.0005%.

A preferable upper limit of the content of Ga is 0.0025%, more preferably is 0.0020%, and further preferably is 0.0015%.

### [Method for measuring chemical composition of non-oriented electrical steel sheet]

The chemical composition of the non-oriented electrical steel sheet of the present embodiment can be measured by a well-known composition analysis method in accordance with JIS G0321: 2017. Specifically, a drill is used to collect a machined chip from the steel sheet. The collected machined chip is dissolved in acid to obtain a liquid solution. The liquid solution is subjected to ICP-AES (inductively coupled plasma atomic emission spectrometry) to perform elemental analysis of the chemical composition. The content of C, the content of S, and the content of O are determined by a well-known high-frequency combustion method (combustion-infrared absorption method). The content of N is determined using a well-known inert gas fusion-thermal conductivity method.

### [(Feature 2) Regarding sheet thickness t]

In the non-oriented electrical steel sheet of the present embodiment, a sheet thickness t is 0.30 mm or less. Because the sheet thickness t is 0.30 mm or less, eddy-current loss is reduced.

A preferable lower limit of the sheet thickness t is 0.14 mm, more preferably is 0.15 mm, further preferably is 0.19 mm, further preferably is 0.20 mm, further preferably is 0.21 mm, and further preferably is 0.24 mm.

A preferable upper limit of the sheet thickness t is 0.29 mm, more preferably is 0.27 mm, and further preferably is 0.25 mm.

### [Method for measuring sheet thickness t of non-oriented electrical steel sheet]

The sheet thickness t of the non-oriented electrical steel sheet is determined by the following method. The sheet thickness is measured at 10 measurement locations on the non-oriented electrical steel sheet. Each of the measurement locations is located on a single line segment oriented in a direction inclined at an angle of 45° from the rolling direction, and the distance between adjacent measurement points is set to 1.0 mm. The arithmetic average value of the 10 sheet thicknesses that are measured is defined as the sheet thickness t (mm) of the relevant non-oriented electrical steel sheet. The sheet thickness is to be made a value to the second decimal place that is obtained by rounding off to the second decimal place of the obtained arithmetic average value. A micrometer is used for the measurement.

### [(Feature 3) Regarding F1]

In the non-oriented electrical steel sheet of the present embodiment, in addition, F1 defined by Formula (1) is 10.0 or more. $F 1 = 4 Si + 3 Al + 2 Mn$ (1)

In the formula, the content in percent by mass of a corresponding element is substituted for each symbol of an element in Formula (1).

F1 is an index relating to the resistivity of a non-oriented electrical steel sheet that satisfies feature 1. If F1 is less than 10.0, even if the non-oriented electrical steel sheet satisfies the other features, sufficiently high resistivity will not be obtained. As a result, sufficiently low iron loss will not be obtained in the non-oriented electrical steel sheet.

If F1 is 10.0 or more, assuming that the other features are satisfied, sufficiently high resistivity will be obtained in the non-oriented electrical steel sheet. As a result, excellent iron loss will be obtained in the non-oriented electrical steel sheet.

A preferable lower limit of F1 is 10.3, more preferably is 10.5, further preferably is 11.5, further preferably is 12.0, and further preferably is 12.5.

The upper limit of F1 is not particularly limited. However, if F1 is too high, the thermal conductivity of the non-oriented electrical steel sheet will decrease. Therefore, a preferable upper limit of F1 is 17.0, more preferably is 16.0, further preferably is 15.5, further preferably is 15.0, further preferably is 14.5, and further preferably is 14.0.

### [(Feature 4) Regarding F2]

In the non-oriented electrical steel sheet of the present embodiment, furthermore, F2 defined by Formula (2) is 8.5 or less. $F 2 = 2 Si + 3 Al + Mn$ (2)

In the formula, the content in percent by mass of a corresponding element is substituted for each symbol of an element in Formula (2).

F2 is an index relating to the saturation magnetic flux density of a non-oriented electrical steel sheet that satisfies feature 1. If F2 is more than 8.5, even if the non-oriented electrical steel sheet satisfies the other features, sufficiently high magnetic flux density will not be obtained. Further, if F2 is more than 8.5, the thermal conductivity may also decrease. If F2 is 8.5 or less, assuming that the other features are satisfied, sufficiently high magnetic flux density will be obtained in the non-oriented electrical steel sheet.

A preferable lower limit of F2 is 5.0, more preferably is 5.5, further preferably is 5.8, and further preferably is 6.0.

A preferable upper limit of F2 is 8.3, more preferably is 8.2, further preferably is 8.0, further preferably is 7.8, further preferably is 7.6, and further preferably is 7.5.

### [(Feature 5) Regarding F3 and F4]

In the non-oriented electrical steel sheet of the present embodiment, in addition, F3 defined by Formula (3) is equal to or less than an iron loss W_{5/1000} at a frequency of 1000 Hz and a magnetic flux density of 0.5 T; and F4 defined by Formula (4) is not less than an iron loss W_{10/400} at a frequency of 400 Hz and a magnetic flux density of 1.0 T when the non-oriented electrical steel sheet is heat-treated for one hour at 800°C. $F 3 = 45 - 12 Si - 5 Al - 2 Mn + 1000 \times t / \left(5+6Si+5Al+3Mn\right)$ (3) $F 4 = 4 + 800 \times t / \left(5+6Si+5Al+3Mn\right)$ (4)

In the formulas, the content in percent by mass of a corresponding element is substituted for each symbol of an element in Formula (3) and Formula (4), and the sheet thickness in units of mm is substituted for t.

F3 and F4 are described hereunder.

F3 and F4 are indexes relating to the strain amount and the strain distribution in the steel micro-structure of a non-oriented electrical steel sheet. As described above, in the non-oriented electrical steel sheet of the present embodiment, in order to obtain high strength and a high magnetic flux density, and also obtain excellent iron loss after strain relief annealing, the content of alloying elements in the steel sheet is deliberately kept low, and a specific strain amount and strain distribution are introduced into the steel sheet. As a result, in a case where the non-oriented electrical steel sheet is to be used for a rotor core, by using the non-oriented electrical steel sheet as the starting material for the rotor core without performing strain relief annealing, high strength and excellent magnetic flux density can be obtained in the produced rotor core. Furthermore, in a case where the non-oriented electrical steel sheet is to be used for a stator core, by subjecting the non-oriented electrical steel sheet to strain relief annealing prior to being used as the starting material for the stator core, excellent iron loss and excellent magnetic flux density can be obtained in the produced stator core.

It is extremely difficult to quantitatively express the amount of strain and the distribution of strain in a steel sheet. Therefore, in the present embodiment, F3 and F4 are adopted as indexes of the strain amount and strain distribution in the steel sheet.

### [Regarding F3]

If F3 is more than an iron loss W_{5/1000} at a frequency of 1000 Hz and a magnetic flux density of 0.5 T, the amount of strain introduced into the steel sheet is excessively small, or the strain distribution in the steel sheet is inappropriate. Consequently, sufficiently high strength cannot be obtained in the non-oriented electrical steel sheet.

If F3 is equal to or less than the iron loss W_{5/1000}, a sufficient amount of strain is introduced into the steel sheet, and the distribution of the introduced strain is also appropriate. Therefore, in the non-oriented electrical steel sheet, assuming that feature 1 to feature 4 are satisfied and that F4 is not less than an iron loss W_{10/400} when the non-oriented electrical steel sheet is heat-treated for one hour at 800°C, high magnetic flux density will be obtained.

A preferable lower limit of F3 is 0.40 times the iron loss W_{5/1000}, more preferably is 0.50 times the iron loss W_{5/1000}, and further preferably is 0.60 times the iron loss W_{5/1000}.

A preferable upper limit of F3 is 0.90 times the iron loss W_{5/1000}, more preferably is 0.87 times the iron loss W_{5/1000}, and further preferably is 0.85 times the iron loss W_{5/1000}.

### [Regarding F4]

If F4 is less than an iron loss W_{10/400} at a frequency of 400 Hz and a magnetic flux density of 1.0 T when the non-oriented electrical steel sheet is heat-treated for one hour at 800°C, the amount of strain introduced into the steel sheet before strain relief annealing has not been sufficiently reduced. Alternatively, the distribution of strain in the steel sheet is inappropriate. In this case, an iron loss that is sufficiently low for stator applications cannot be obtained. In addition, since strain inhibits magnetization, a magnetic flux density B₁ decreases in a magnetic field of 100 A/m in particular.

If F4 is equal to or more than an iron loss W_{10/400} when the non-oriented electrical steel sheet is heat-treated for one hour at 800°C, a sufficient amount of strain has been reduced from within the steel sheet, and the distribution of the introduced strain is also appropriate. Therefore, in the non-oriented electrical steel sheet, assuming that feature 1 to feature 4 are satisfied and that F3 is equal to or less than the iron loss W_{5/1000}, excellent iron loss and excellent magnetic flux density will be obtained in the non-oriented electrical steel sheet after strain relief annealing.

A preferable lower limit of F4 is 1.01 times the iron loss W_{10/400}, more preferably is 1.02 times the iron loss W_{10/400}, and further preferably is 1.05 times the iron loss W_{10/400}.

A preferable upper limit of F4 is 1.50 times the iron loss W_{10/400}, more preferably is 1.40 times the iron loss W_{10/400}, and further preferably is 1.30 times the iron loss W_{10/400}.

### [Method for measuring iron loss W_{5/1000} of non-oriented electrical steel sheet]

The iron loss W_{5/1000} of the non-oriented electrical steel sheet of the present embodiment is determined by the following Epstein test method.

A plurality of Epstein test specimens are cut out from the non-oriented electrical steel sheet in accordance with JIS C 2550-1: 2011 and 2550-3: 2019. The size of each Epstein test specimen is to be 30 mm in width by 280 mm in length. As the Epstein test specimens, a plurality of L-direction test specimens in which the longitudinal direction is the rolling direction of the non-oriented electrical steel sheet, and a plurality of C-direction test specimens in which the longitudinal direction is the direction perpendicular to the rolling direction of the non-oriented electrical steel sheet are cut out. The number of L-direction test specimens and the number of C-direction test specimens are to be the same, and the total number of the test specimens is to be 16 (eight L-direction test specimens and eight C-direction test specimens).

The L-direction test specimens and C-direction test specimens are to be arranged in an Epstein frame. Assuming that the four sides of the Epstein frame are parallel to either the X direction or the Y direction, four of the L-direction test specimens are to be arranged on each of the pair of sides that are parallel to the X direction. Four of the C-direction test specimens are to be arranged on each of the pair of sides that are parallel to the Y direction. The ends of the L-direction test specimens and the ends of the C-direction test specimens are to be stacked so as to alternately overlap one by one. By this means, the L-direction test specimens and the C-direction test specimens are assembled in a square shape. The Epstein test specimens assembled in the square shape are subjected to a test method for an electrical steel strip and sheet in accordance with JIS C 2550-1:2011 and 2550-3:2019, and the iron loss W_{5/1000} (W/kg) at 1000 Hz and 0.5 T is measured.

### [Method for measuring iron loss W_{10/400} after strain relief annealing of non-oriented electrical steel sheet]

The iron loss W_{10/400} after strain relief annealing of the non-oriented electrical steel sheet of the present embodiment is determined by the following method. In accordance with the method described above in the section [Method for measuring iron loss W_{5/1000} of non-oriented electrical steel sheet], a plurality of Epstein test specimens (eight L-direction test specimens and eight C-direction test specimens) are cut out from the non-oriented electrical steel sheet. The Epstein test specimens (L-direction test specimens and C-direction test specimens) that are cut out are subjected to a heat treatment (strain relief annealing). In the heat treatment, the heat treatment temperature is to be set to 800°C, and the holding time at the heat treatment temperature is to be one hour. Note that, the temperature and time are based on the temperature of the Epstein test specimens themselves, and not the temperature of the annealing furnace (furnace temperature). The strain relief annealing is performed on the Epstein test specimens in a stacked state. Measurement of the temperature of the Epstein test specimens is performed using a thermocouple.

In order to measure the temperature, Epstein test specimens for testing and the same number of Epstein test specimens for temperature measurement as the Epstein test specimens for testing are loaded into the same heat treatment furnace and are simultaneously subjected to a heat treatment. Specifically, an Epstein test specimen set for testing in which a plurality of Epstein test specimens for testing are stacked on top of one another, and an Epstein test specimen set for temperature measurement in which a plurality of Epstein test specimens for temperature measurement are stacked on top of one another are prepared. The insulating coating of the Epstein test specimen (steel sheet) positioned at center in the stacking direction of the Epstein test specimen set for temperature measurement is removed with sandpaper (#240). A thermocouple is welded to the place from where the insulating coating was removed. The Epstein test specimen set for temperature measurement having the thermocouple welded thereto is subjected to a heat treatment at the same time as the Epstein test specimen set for testing. At such time, the temperature obtained by the thermocouple of the Epstein test specimen set for temperature measurement is regarded as the temperature of the Epstein test specimen set for testing.

Note that, during the heat treatment, it is not necessary to fix the plurality of Epstein test specimens in the Epstein test specimen set for testing to one another, and it is not necessary to fix the plurality of Epstein test specimens in the Epstein test specimen set for temperature measurement to one another. If the stacking of the plurality of Epstein test specimens for temperature measurement in the Epstein test specimen set for temperature measurement becomes unstable due to insertion of the thermocouple, the respective ends in the longitudinal direction of the Epstein test specimens in the Epstein test specimen set for temperature measurement may be tied and fixed together using wire made of stainless steel or the like with a diameter of approximately 0.3 mm.

After being heated to 800°C, the Epstein test specimens for testing (L-direction test specimens and C-direction test specimens) are arranged in an Epstein frame. Similarly to the method described above in the section [Method for measuring iron loss W_{5/1000} of non-oriented electrical steel sheet], four of the L-direction test specimens are arranged on each of the pair of sides that are parallel to the X direction of the Epstein frame. Four of the C-direction test specimens are arranged on each of the pair of sides that are parallel to the Y direction. The ends of the L-direction test specimens and the ends of the C-direction test specimens are to be stacked so as to alternately overlap one by one. By this means, the L-direction test specimens and the C-direction test specimens are assembled in a square shape. The Epstein test specimens assembled in the square shape are subjected to a test method for an electrical steel strip and sheet in accordance with JIS C 2550-1:2011 and 2550-3:2019, and the iron loss W_{10/400} at 400 Hz and 1.0 T is measured.

### [Advantageous effects of non-oriented electrical steel sheet of present embodiment]

The non-oriented electrical steel sheet of the present embodiment satisfies feature 1 to feature 5. Therefore, in the non-oriented electrical steel sheet of the present embodiment, high strength and excellent magnetic flux density are obtained. In addition, in the non-oriented electrical steel sheet of the present embodiment, excellent iron loss is obtained after strain relief annealing.

### [Regarding strength]

In the non-oriented electrical steel sheet of the present embodiment, furthermore, high strength is obtained. Specifically, in the non-oriented electrical steel sheet of the present embodiment, the yield stress is 450 MPa or more.

A preferable lower limit of the yield stress is 460 MPa, more preferably is 470 MPa, and further preferably is 480 MPa.

The upper limit of the yield stress is not particularly limited. However, in the non-oriented electrical steel sheet of the present embodiment, the upper limit of the yield stress is, for example, 530 MPa.

### [Method for measuring yield stress]

The yield stress of the non-oriented electrical steel sheet of the present embodiment is measured by the following method.

A JIS No. 5 tensile test piece defined in JIS Z 2241: 2011 is taken from the non-oriented electrical steel sheet. The tensile test piece that is taken is used to carry out a tensile test at normal temperature and atmospheric pressure in accordance with JIS Z 2241: 2011 to determine the yield stress (MPa). Note that, in a case where an upper yield point occurs on the stress-strain curve obtained by the tensile test, the yield stress is defined as the upper yield point (MPa). Further, if an upper yield point does not occur on the obtained stress-strain curve, the yield stress is defined as the 0.2% proof stress (MPa).

### [Regarding magnetic flux density]

Excellent magnetic flux density is obtained in the non-oriented electrical steel sheet of the present embodiment. Specifically, when the rolling direction is designated as a reference 0° and a magnetic flux density B₅₀ in directions of respective angles at intervals of 22.5° is designated as B₅₀(0°), B₅₀(22.5°), B₅₀(45°), B₅₀(67.5°), and B₅₀(90°), respectively, an average magnetic flux density B₅₀ₐᵥₑ defined by Formula (5) is 1.65 T or more. ${B}_{50 ave} = \left({B}_{50}\left(0°\right)+2\times {B}_{50}\left(22.5°\right)+2\times {B}_{50}\left(45°\right)+2\times {B}_{50}\left(67.5°\right)+{B}_{50}\left(90°\right)\right) / 8$ (5)

### [Method for measuring average magnetic flux density B₅₀ₐᵥₑ]

The average magnetic flux density B₅₀ₐᵥₑ is determined by the following method.

Epstein test specimens are prepared from the non-oriented electrical steel sheet in the rolling direction (L direction), in directions at angles of 22.5°, 45°, and 67.5° from the rolling direction, respectively, and in a direction perpendicular (90° direction, that is, the C direction) to the rolling direction, and the magnetic flux density B₅₀ in the respective directions is measured using the respective Epstein test specimens. The test method is basically in accordance with JIS C 2550-1 (2011). One set of Epstein test specimens extending in the L direction, the 22.5° direction, the 45° direction, the 67.5° direction, and the C direction is cut out for each direction, respectively. A test method for an electrical steel strip and sheet in accordance with JIS C 2550-1 (2011) and 2550-3 (2011) is performed on each set of Epstein test specimens cut out in the same direction, and the magnetic flux density B₅₀ at 5000 A/m in each direction is measured. The obtained magnetic flux density B₅₀ in each direction is substituted into Formula (5) to obtain an average magnetic flux density B₅₀ₐᵥₑ (T).

Preferably, in the non-oriented electrical steel sheet of the present embodiment, in addition, in a case where the non-oriented electrical steel sheet is heat-treated for one hour at 800°C, when the rolling direction is designated as a reference 0° and a magnetic flux density B₁ in directions of respective angles at intervals of 22.5° is designated as B₁(0°), B₁(22.5°), B₁(45°), B₁(67.5°), and B₁(90°), respectively, an average magnetic flux density B₁ₐᵥₑ defined by Formula (6) is 0.70 T or more, and when the direction of a maximum value of a magnetic flux density B₅₀₀ is designated as a reference 0° and the magnetic flux density B₅₀₀ in directions of respective angles at intervals of 22.5° is designated as B₅₀₀(0°), B₅₀₀(22.5°), B₅₀₀(45°), B₅₀₀(67.5°), and B₅₀₀(90°), respectively, an average magnetic flux density B₅₀₀ₐᵥₑ defined by Formula (7) is 1.98 T or more. ${B}_{1 ave} = \left({B}_{1}\left(0°\right)+2\times {B}_{1}\left(22.5°\right)+2\times {B}_{1}\left(45°\right)+2\times {B}_{1}\left(67.5°\right)+{B}_{1}\left(90°\right)\right) / 8$ (6) ${B}_{500 ave} = \left({B}_{500}\left(0°\right)+2\times {B}_{500}\left(22.5°\right)+2\times {B}_{500}\left(45°\right)+2\times {B}_{500}\left(67.5°\right)+{B}_{500}\left(90°\right)\right) / 8$ (7)

When the non-oriented electrical steel sheet is heat-treated for one hour at 800°C, if the average magnetic flux density B₁ₐᵥₑ is 0.70 T or more and the average magnetic flux density B₅₀₀ₐᵥₑ is 1.98 T or more, in an electric vehicle, sufficient magnetic flux density will be obtained in each of the following situations: during high-speed driving when the magnetic field applied to the motor is lowest; during city driving when the magnetic field applied to the motor is higher than during high-speed driving but lower than during uphill driving; and during uphill driving when the magnetic field applied to the motor is highest.

### [Method for measuring average magnetic flux density B₁ₐᵥₑ]

The average magnetic flux density B₁ₐᵥₑ is determined by the following method.

Epstein test specimens are prepared from the non-oriented electrical steel sheet in the rolling direction (L direction), in directions at angles of 22.5°, 45°, and 67.5° from the rolling direction, respectively, and in a direction perpendicular (90° direction, that is, the C direction) to the rolling direction. The non-oriented electrical steel sheet is heat-treated (strain relief annealing) for one hour at 800°C. The magnetic flux density B₁ in the respective directions is measured using the Epstein test specimens after the heat treatment. The test method is basically in accordance with JIS C 2550-1 (2011). The Epstein test specimens extending in the L direction, the 22.5° direction, the 45° direction, the 67.5° direction, and the C direction are subjected to a test method for an electrical steel strip and sheet in accordance with JIS C 2550-1 (2011) and 2550-3 (2011) that is performed with respect to each set of Epstein test specimens in the same direction, and the magnetic flux density B₁ at 100 A/m in each direction is measured. The obtained magnetic flux density B₁ in each direction is substituted into Formula (6) to obtain an average magnetic flux density B₁ₐᵥₑ (T).

### [Method for measuring average magnetic flux density B₅₀₀ₐᵥₑ]

The average magnetic flux density B₅₀₀ₐᵥₑ is determined by the following method.

Epstein test specimens are prepared from the non-oriented electrical steel sheet in the rolling direction (L direction), in directions at angles of 22.5°, 45°, and 67.5° from the rolling direction, respectively, and in a direction perpendicular (90° direction, that is, the C direction) to the rolling direction. The non-oriented electrical steel sheet is subjected to a heat treatment (strain relief annealing) for one hour at 800°C. The magnetic flux density B₅₀₀ in the respective directions is measured using the Epstein test specimens after the heat treatment. The test method is basically in accordance with JIS C 2550-1 (2011). The Epstein test specimens extending in the L direction, the 22.5° direction, the 45° direction, the 67.5° direction, and the C direction are subjected to a test method for an electrical steel strip and sheet in accordance with JIS C 2550-1 (2011) and 2550-3 (2011) that is performed with respect to each set of Epstein test specimens in the same direction, and the magnetic flux density B₅₀₀ at 50000 A/m in each direction is measured. The obtained magnetic flux density B₅₀₀ in each direction is substituted into Formula (7) to obtain an average magnetic flux density B₅₀₀ₐᵥₑ (T).

### [Regarding iron loss]

In the non-oriented electrical steel sheet of the present embodiment, excellent iron loss is obtained after strain relief annealing. Specifically, an iron loss W_{10/400} after the non-oriented electrical steel sheet is heat-treated for one hour at 800°C is less than F4 W/kg.

### [Regarding other properties]

### [Regarding thermal conductivity]

In the non-oriented electrical steel sheet of the present embodiment, in addition, the thermal conductivity is high. Specifically, in the non-oriented electrical steel sheet of the present embodiment, the thermal conductivity at 20°C is 20 W/mK or more, and the thermal conductivity at 150°C is 23 W/mK or more.

In this case, in a rotor core and a stator core that are produced using the non-oriented electrical steel sheet of the present embodiment as the starting material, the thermal conductivity is high. Therefore, during operation of a motor core, the occurrence of a situation in which the motor core becomes excessively hot can be suppressed. Consequently, demagnetization of magnets in the motor core is suppressed.

### [Method for measuring thermal conductivity]

The thermal conductivity of the non-oriented electrical steel sheet can be measured by the following method.

The thermal conductivity of the non-oriented electrical steel sheet can be calculated as the product of the thermal diffusion coefficient, density, and specific heat. Therefore, the thermal diffusion coefficient, density, and specific heat of the non-oriented electrical steel sheet are calculated by the following method.

The thermal diffusion coefficient of the non-oriented electrical steel sheet is determined using a laser flash analyzer. Specifically, a test specimen measuring 6 mm in diameter × the sheet thickness is taken from the center portion of the width of the non-oriented electrical steel sheet. One of the surfaces of the test specimen is irradiated with a laser pulse using a laser flash analyzer. At such time, changes in the temperature of the other surface are detected using an infrared detector. The time-series changes in the temperature are acquired. The thermal diffusion coefficient (m²/sec) is determined using the thermal diffusion equation.

In addition, the density of the non-oriented electrical steel sheet is determined based on the Archimedes method. Specifically, a test specimen with dimensions of 100 mm × 100 mm × the sheet thickness is taken from the center portion of the width of the non-oriented electrical steel sheet. The mass of the test specimen in a dry state is determined. Next, the test specimen is immersed in a water bath. The mass of the test specimen in the immersed state (that is, in a state in which the test specimen receives the buoyancy of water) is determined. Using these results and the specific gravity of water, the specific gravity of the test specimen (non-oriented electrical steel sheet) is determined.

Further, the specific heat of the non-oriented electrical steel sheet is determined using a differential scanning calorimeter. Specifically, a test specimen measuring 6 mm in diameter × the sheet thickness is taken from the center portion of the width of the non-oriented electrical steel sheet. The test specimen is placed on the sample pan of the differential scanning calorimeter. A substance having a known specific heat is used as a reference sample. The temperature of the test specimen and the temperature of the reference sample are changed at a constant rate, and the specific heat of the test specimen (non-oriented electrical steel sheet) is determined based on the difference in the temperature changes between the test specimen and the reference sample.

Based on the obtained thermal diffusion coefficient, specific gravity, and specific heat of the non-oriented electrical steel sheet, the thermal conductivity (W/mK) at 20°C and the thermal conductivity (W/mK) at 150°C of the non-oriented electrical steel sheet are calculated.

### [Regarding breaking elongation]

The non-oriented electrical steel sheet of the present embodiment is also excellent in breaking elongation. Specifically, in the non-oriented electrical steel sheet of the present embodiment, the breaking elongation is 20% or more. The non-oriented electrical steel sheet of the present embodiment is excellent in breaking elongation. Therefore, when producing a motor core by stacking together a plurality of motor core starting materials (rotor core starting materials or stator core starting materials to be described later) formed by processing the non-oriented electrical steel sheet, it is possible to fix overlapping motor core starting materials by means of interlocks and without using adhesive to fix the overlapping motor core starting materials.

As described above, excellent breaking elongation is obtained in the non-oriented electrical steel sheet of the present embodiment. Therefore, when producing motor core starting materials using the non-oriented electrical steel sheet of the present embodiment as a starting material, interlocks can be formed even if the sheet thickness is 0.30 mm or less. Excellent iron loss will be obtained in a motor core formed by stacking the motor core starting materials.

The breaking elongation can be determined by performing a tensile test based on the method described above in the section [Method for measuring yield stress], and determining the breaking elongation based on the obtained stress-strain curve.

### [Method for producing non-oriented electrical steel sheet]

One example of a method for producing the non-oriented electrical steel sheet of the present embodiment will now be described. One example of a method for producing the non-oriented electrical steel sheet of the present embodiment includes the following processes.
(Process 1) Hot rolling process
(Process 2) Hot-rolled sheet annealing process
(Process 3) Cold rolling process
(Process 4) Final annealing process

Note that, the hot-rolled sheet annealing process of Process 2 is an optional process, and may be performed or need not be performed. Each process is described hereunder.

### [(Process 1) Hot rolling process]

In the hot rolling process, a slab is subjected to hot rolling to produce a hot-rolled steel sheet. The slab has a chemical composition such that the chemical composition of the produced non-oriented electrical steel sheet satisfies feature 1. The slab is produced by a well-known method. For example, the slab is produced by a continuous casting process using molten steel having the chemical composition described above.

The prepared slab is subjected to hot rolling. Preferably, the conditions of the hot rolling process are appropriately adjusted according to whether or not the hot-rolled sheet annealing process is to be performed as the next process. For example, in a case where the hot-rolled sheet annealing process will not be performed (that is, in the case of performing self-annealing), in the hot rolling process the preferable slab heating temperature is 1200°C to 1250°C, the preferable rolling finishing temperature is 1050°C or more, and the preferable coiling temperature is 750°C or less. For example, in a case where the hot-rolled sheet annealing will be performed, in the hot rolling process the preferable slab heating temperature is 1100 to 1150°C, the preferable rolling finishing temperature is 850°C or less, and the preferable coiling temperature is 700°C or less.

### [(Process 2) Hot-rolled sheet annealing process]

The hot-rolled sheet annealing process is an optional process. That is, the hot-rolled sheet annealing process does not have to be performed.

In a case where the hot-rolled sheet annealing process is performed and box annealing is performed as the hot-rolled sheet annealing, the preferable heat treatment temperature is 800°C or more, and the preferable holding time at the heat treatment temperature is 10 hours or more. In the case of performing continuous annealing as the hot-rolled sheet annealing, the preferable heat treatment temperature is 950°C or more, and the preferable holding time at the heat treatment temperature is 30 seconds or more. Note that, as necessary, a well-known pickling treatment may be performed on the steel sheet before performing annealing in the hot-rolled sheet annealing process, and/or on the steel sheet after annealing is performed.

### [(Process 3) Cold rolling process]

In the cold rolling process, the hot-rolled steel sheet produced in the hot rolling process or the hot-rolled steel sheet after the hot-rolled sheet annealing process is subjected to cold rolling to produce a cold-rolled steel sheet. The cold rolling may be performed one time or may be performed multiple times. In the case of performing cold rolling multiple times, well-known intermediate annealing may be performed at a timing that is after one cold rolling operation is performed and is before the next cold rolling operation is performed.

### [(Process 4) Final annealing process]

The cold-rolled steel sheet produced by performing the cold rolling process is subjected to final annealing to produce a non-oriented electrical steel sheet. In the final annealing, the cold rolled steel sheet finished to the final sheet thickness is annealed to cause recrystallization and grain growth. The final annealing process includes a temperature increasing process, a holding process of holding the steel sheet at a peak metal temperature T1 (°C), and a cooling process of cooling the steel sheet after the holding process. In the final annealing process, the following condition 1 to condition 3 are to be satisfied.

### (Condition 1)

Annealing is to be performed at a peak metal temperature T1 of 900°C or less.

### (Condition 2)

The lower temperature among the peak metal temperature T1 (°C) and 800°C is referred to herein as a "maximum temperature affected by strain T2" (°C). Further, the temperature range from the maximum temperature affected by strain T2 to 500°C in the cooling process is referred to herein as a "strain-inducing temperature range". In the strain-inducing temperature range during the cooling process, a tension TE (kgf/mm²) applied to the steel sheet is to satisfy the following Formula (A). $1.0 \geq TE \geq 1.2 - T 2 / 1000$ (A)

In the formula, the tension (kgf/mm²) applied to the steel sheet in the strain-inducing temperature range is substituted for TE in Formula (A). In a case where the tension in the strain-inducing temperature range changes, the maximum value of the tension in the strain-inducing temperature range is substituted for TE in Formula (A).

Note that, in a case where tension is applied and strain is introduced to the steel sheet during the cooling process, the strain will tend to disappear due to recovery in a temperature range of 800°C or more. Therefore, the maximum temperature affected by strain T2 is to be set to whichever temperature is the lower temperature (°C) among the peak metal temperature T1 and 800°C.

### (Condition 3)

The peak metal temperature T1, the tension TE, the maximum temperature affected by strain T2, and an average cooling rate CR (°C/sec) from the maximum temperature affected by strain T2 to 500°C in the cooling process are to satisfy Formula (B). $LOG \left\{\left(T2-500\right)/CR-5\right\} \times TE \geq 0.02$ (B)

In Formula (B), the maximum temperature affected by strain T2 (°C) is substituted for T2. The average cooling rate CR (°C/sec) is substituted for CR. The tension (kgf/mm²) applied to the steel sheet in the strain-inducing temperature range is substituted for TE. In a case where the tension in the strain-inducing temperature range changes, the maximum value of the tension in the strain-inducing temperature range is substituted for TE in Formula (B).

Hereunder, each condition is described.

### [(Condition 1) Regarding peak metal temperature T1]

The peak metal temperature T1 is to be 900°C or less.

If the peak metal temperature T1 is more than 900°C, the strain amount and strain distribution will not be appropriate in the produced non-oriented electrical steel sheet. As a result, F3 will be more than W_{5/1000}, or F4 will be less than the iron loss W_{10/400} when the non-oriented electrical steel sheet is heat-treated for one hour at 800°C.

If the peak metal temperature T1 is 900°C or less, the strain amount and strain distribution will be appropriate in the produced non-oriented electrical steel sheet. As a result, F3 will be W_{5/1000} or less, and F4 will be not less than the iron loss W_{10/400} when the non-oriented electrical steel sheet is heat-treated for one hour at 800°C.

Note that, the lower limit of the peak metal temperature T1 is, for example, 700°C.

### [(Condition 2) Regarding Formula (A)]

In the strain-inducing temperature range in the cooling process, the tension TE applied to the steel sheet is to be adjusted to satisfy the following Formula (A). $1.0 \geq TE \geq 1.2 - T 2 / 1000$ (A)

The tension TE applied to the steel sheet in the strain-inducing temperature range influences the strain amount and strain distribution in the produced non-oriented electrical steel sheet.

Let FA be defined as follows. $FA = 1.2 - T 2 / 1000$

If the tension TE (kgf/mm²) is less than FA, the amount of strain and the distribution of the strain applied to the steel sheet in the strain-inducing temperature range will not be appropriate. Therefore, F3 will be more than W_{5/1000}, or F4 will be less than the iron loss W_{10/400} when the non-oriented electrical steel sheet is heat-treated for one hour at 800°C.

If the tension TE (kgf/mm²) is not less than FA, the amount of strain and the distribution of the strain applied to the steel sheet in the strain-inducing temperature range will be in an appropriate range. Therefore, F3 will be W_{5/1000} or less, and F4 will be not less than the iron loss W_{10/400} when the non-oriented electrical steel sheet is heat-treated for one hour at 800°C.

On the other hand, if the tension TE is more than 1.0 kgf/mm², strain will be excessively introduced in the strain-inducing temperature range, which, on the contrary, will result in the occurrence of a large amount of pair annihilation of dislocations. In such case, the strain amount will be insufficient, and an appropriate strain distribution will not be formed. Consequently, F3 will be more than W_{5/1000}, or F4 will be less than the iron loss W_{10/400} when the non-oriented electrical steel sheet is heat-treated for one hour at 800°C.

### [(Condition 3) Regarding Formula (B)]

In order to introduce an appropriate amount of strain into the non-oriented electrical steel sheet and form an appropriate strain distribution, it is necessary to apply an appropriate tension TE for an appropriate period of time within the strain-inducing temperature range. Here, RS is defined as follows. $RS = LOG \left\{\left(T2-500\right)/CR-5\right\} \times TE \geq 0.02$ (B)

In Formula (B), the maximum temperature affected by strain T2 (°C) is substituted for T2. The average cooling rate CR (°C/sec) is substituted for CR. The tension (kgf/mm²) applied to the steel sheet in the strain-inducing temperature range is substituted for TE.

If RS is less than 0.02, the time period for which tension satisfying condition 2 is applied in the strain-inducing temperature range is too short. In such case, the amount of strain accumulated in the non-oriented electrical steel sheet is insufficient, and an appropriate strain distribution is not formed. Therefore, F3 will be more than W_{5/1000}, or F4 will be less than the iron loss W_{10/400} when the non-oriented electrical steel sheet is heat-treated for one hour at 800°C.

If RS is 0.02 or more, assuming that the other conditions are satisfied, the amount of strain accumulated in the non-oriented electrical steel sheet is appropriate, and an appropriate strain distribution is formed. As a result, F3 will be W_{5/1000} or less, and F4 will be not less than the iron loss W_{10/400} when the non-oriented electrical steel sheet is heat-treated for one hour at 800°C.

### [Other process]

In the production method described above, a coating process may be performed after the final annealing process. In the coating process, an insulating coating is applied to the surface of the non-oriented electrical steel sheet after the final annealing. The type of insulating coating is not particularly limited. The insulating coating may be composed of organic components, inorganic components, or a mixture of organic components and inorganic components.

The non-oriented electrical steel sheet of the present embodiment can be produced by the production method described above. Note that, a method for producing the non-oriented electrical steel sheet of the present embodiment is not particularly limited as long as the non-oriented electrical steel sheet satisfies feature 1 to feature 5.

### [Regarding rotor core]

The rotor core of the present embodiment is produced using the non-oriented electrical steel sheet of the present embodiment as a starting material.

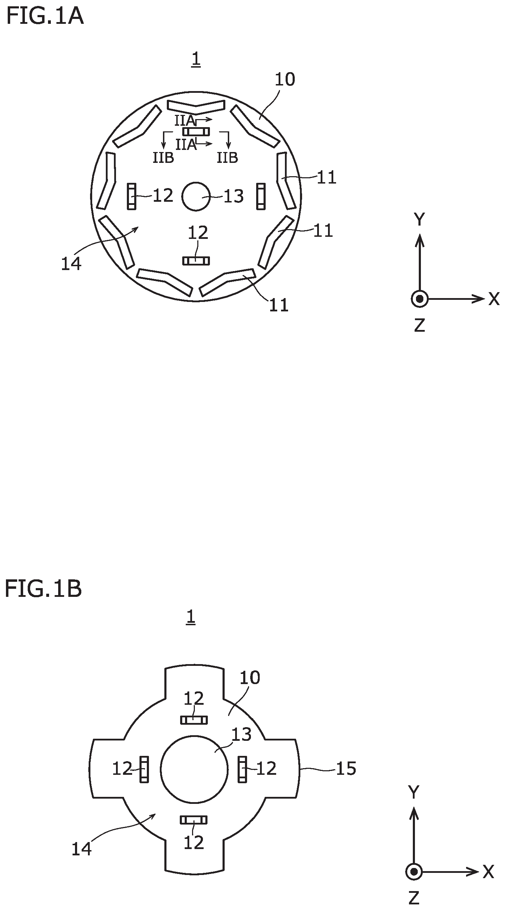

FIG. 1A is a plan view illustrating one example of a rotor core 1. Referring to FIG. 1A, the rotor core 1 includes a plurality of rotor core starting materials 10. The rotor core starting material 10 is a sheet shape. The rotor core 1 is constituted by a plurality of the rotor core starting materials 10 that are stacked on top of one another.

The shape of the rotor core is not particularly limited as long as the rotor core is a sheet shape. In FIG. 1A, as one example, a rotor core of a permanent magnet synchronous motor is illustrated. In FIG. 1A, the rotor core starting material 10 is a disk shape, and includes a plurality of through-holes 11 arranged in the circumferential direction. A permanent magnet, not illustrated, is placed in the through-hole 11. The rotor core starting material 10 further includes a through-hole 13 at the center thereof. A motor shaft, not illustrated, is inserted into the through-hole 13.

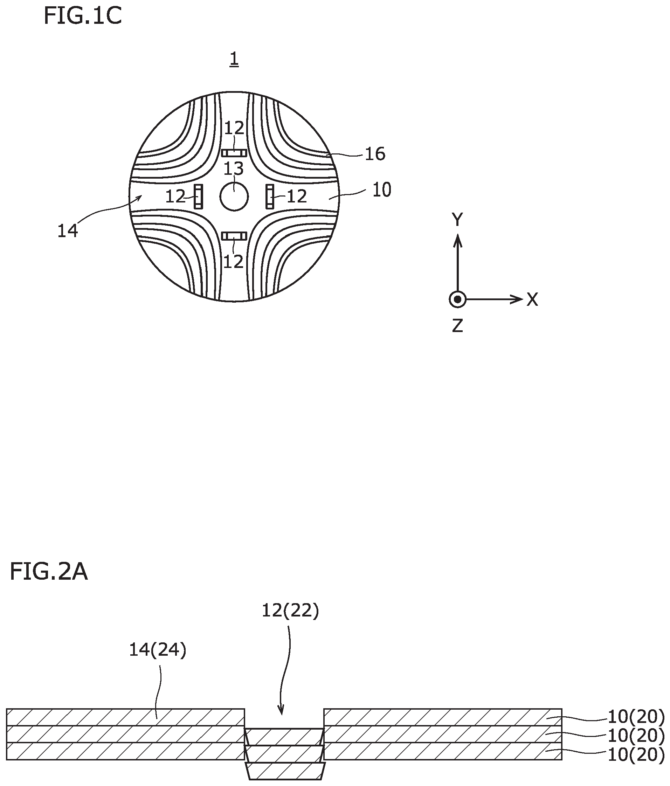

Note that, a rotor core in a case where the motor is a permanent magnet synchronous motor is illustrated in FIG. 1A, however, as long as the rotor core is a sheet shape, the rotor core may be a different shape to the shape illustrated in FIG. 1A. For example, if the motor is a reluctance motor, the rotor core may be a sheet shape having a plurality of salient poles 15 as illustrated in FIG. 1B, or may be a disk shape having a plurality of through-holes 16 that serve as flux barriers as illustrated in FIG. 1C. Further, if the motor is an induction motor, the rotor core may have a plurality of through-holes in which induced current paths composed of copper or aluminum die casting or the like are provided.

The rotor core starting material 10 is produced by punching the non-oriented electrical steel sheet of the present embodiment. Therefore, the rotor core starting material 10 satisfies feature 1 to feature 5. Consequently, the rotor core 1 has high strength. The rotor core 1 also has excellent magnetic flux density. Furthermore, the rotor core starting material 10 is excellent in breaking elongation. Specifically, the breaking elongation of the rotor core starting material 10 is 20% or more.

### [Method for measuring magnetic properties of rotor core starting material]

The magnetic flux density and iron loss of the rotor core starting material can be measured based on the single sheet test (SST) specified in JIS C 2556:2015.

Specifically, the rotor core starting material is separated from the rotor core. If rotor core starting materials are fixed together with adhesive, the rotor core starting materials may be heated to a temperature range of 300 to 450°C to soften the adhesive, and thereafter the rotor core starting materials may be separated from the rotor core.

An SST test specimen is taken from the separated rotor core starting material. Note that, in order to avoid the occurrence of processing strain, wire cutting is used to collect the SST test specimen. The size of the SST test specimen is set to, for example, 55 mm ×55 mm × the sheet thickness.

Note that, in a case where an SST test specimen with dimensions of 55 mm ×55 mm × the sheet thickness cannot be taken from the rotor core starting material, two L-direction SST test specimens with dimensions of 16 mm in the L direction (rolling direction) × 8 mm in width × sheet thickness are to be taken, and two C-direction SST test specimens with dimensions of 16 mm in the C direction (direction perpendicular to the rolling direction) × 8 mm in width × sheet thickness are to be taken. To measure the iron loss in the L direction, the two L-direction SST test specimens are arranged in a 16 mm × 16 mm square shape and the test is conducted. To measure the iron loss in the C direction, the two C-direction SST test specimens are arranged in a 16 mm × 16 mm square shape and the test is conducted.

The iron loss W_{5/1000(L)} (W/kg) in the L direction and the iron loss W_{5/1000(C)} (W/kg) in the C direction are determined by the aforementioned single sheet test (SST test) using the SST test specimens. The arithmetic average value of the iron loss W_{5/1000(L)} (W/kg) in the L direction and the iron loss W_{5/1000(C)} (W/kg) in the C direction is defined as an iron loss W_{5/1000(L+C)} (W/kg). The obtained iron loss W_{5/1000(L+C)} is converted to a value corresponding to a measurement value obtained with an Epstein tester as specified in JIS C 2550-1:2011 and JIS C 2550-3:2019, and is defined as an Epstein equivalent value.

The Epstein equivalent value can be determined by the following method. An Epstein test specimen and an SST test specimen are taken in advance from the same non-oriented electrical steel sheet. The iron loss W_{5/1000(EP)} (W/kg) of the Epstein test specimen is determined by the method described above in the section [Method for measuring iron loss W_{5/1000} of non-oriented electrical steel sheet]. The iron loss W_{5/1000(L+C)} (W/kg) of the SST test specimen is determined by the SST test described above. A conversion factor K is determined by the following formula based on the obtained iron loss W_{5/1000(EP)} (W/kg) for the Epstein test specimen and the obtained iron loss W_{5/1000(L+C)} (W/kg) for the SST test specimen. 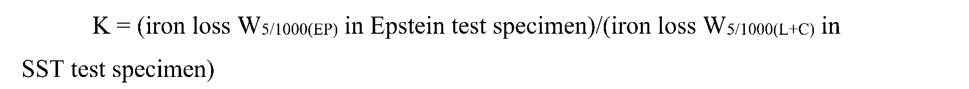 K = (iron loss W5/1000(EP) in Epstein test specimen)/(iron loss W5/1000(L+C) in SST test specimen)

The measurement value (iron loss W_{5/1000(L+C)}) of the rotor core obtained by the SST test is multiplied by the aforementioned K to calculate the iron loss W_{5/1000} (W/kg) for the Epstein equivalent value. The calculated Epstein equivalent value is defined as the iron loss W_{5/1000} (W/kg) of the rotor core.

Note that, in a case where an Epstein test specimen cannot be taken from the rotor core starting material, a non-oriented electrical steel sheet that has substantially the same density, magnetic flux density B50, and iron loss W_{5/1000(L+C)} as the density of the rotor core starting material and the magnetic flux density B50 and iron loss W_{5/1000(L+C)} in the SST test is to be prepared. Specifically, in the prepared non-oriented electrical steel sheet, the density is to be within the range of ±1% of the density of the rotor core starting material, the iron loss W_{5/1000(L+C)} obtained with the SST test specimen is to be within the range of ±5% of the iron loss W_{5/1000(L+C)} obtained with the SST test specimen of the rotor core starting material, and the magnetic flux density B50 obtained with the SST test specimen is to be within the range of ±2% of the magnetic flux density B50 obtained with the SST test specimen of the rotor core starting material. The prepared non-oriented electrical steel sheet is used to determine the iron loss W_{5/1000(EP)} using an Epstein test specimen by the method described above in the section [Method for measuring iron loss W_{5/1000} of non-oriented electrical steel sheet]. The determined iron loss W_{5/1000(EP)} (W/kg) is defined as the Epstein equivalent value.

Preferably, the rotor core starting material 10 may further include an interlocking part 12 and a flat portion 14, as illustrated in FIG. 1A to FIG. 1C. The interlocking part 12 is an indentation formed in the rotor core starting material 10. When a plurality of the rotor core starting materials 10 are stacked, the interlocking parts 12 of the rotor core starting materials 10 that vertically overlap one another fit together and are fixed to one another. Unlike the interlocking part 12, the flat portion 14 is a flat region. The flat portion 14 is a portion that serves as the base material of the rotor core starting material 10, and the sheet thickness of the flat portion 14 corresponds to the sheet thickness of the non-oriented electrical steel sheet that is the starting material.

When forming the rotor core 1 using the interlocking parts 12, it is not necessary to fix the rotor core starting materials 10 together with adhesive. If the rotor core starting materials 10 are fixed together with adhesive, compressive stress will be applied to the rotor core starting materials 10 due to volume shrinkage that occurs during solidification of the adhesive. The iron loss of the rotor core 1 will deteriorate due to the compressive stress. On the other hand, when the rotor core starting materials 10 are fixed together using the interlocking parts 12, no compressive stress like the compressive stress caused by an adhesive will be applied.

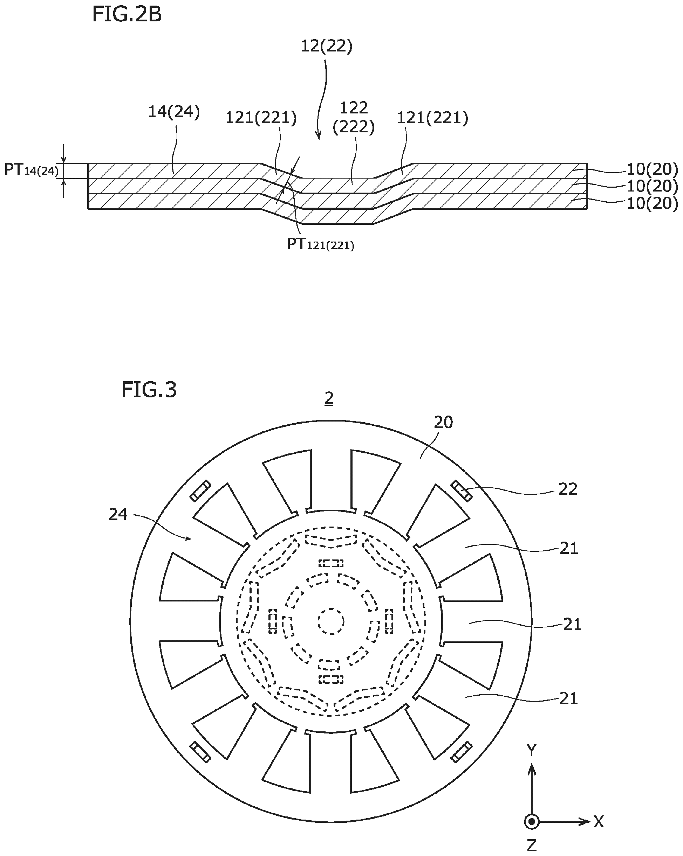

FIG. 2A is a cross-sectional view along a line segment IIA-IIA (X-direction) of the interlocking part 12 in FIG. 1A. FIG. 2B is a cross-sectional view along a line segment IIB-IIB (Y-direction) of the interlocking part 12 in FIG. 1A. Referring to FIG. 2A and FIG. 2B, the interlocking part 12 includes a pair of inclined portions 121. Each of the inclined portions 121 is formed to be inclined with respect to the flat portion 14 of the rotor core starting material 10. The interlocking part 12 may include a bottom portion 122 between the pair of inclined portions 121. Furthermore, the interlocking part 12 may be a so-called "V-shaped interlocking part" which does not include the bottom portion 122 and in which the lower ends of the pair of inclined portions 121 are connected. By including the inclined portions 121 in the interlocking part 12, the fixing force generated when the interlocking parts 12 are fitted together is increased.

Note that, the cross-sectional shape of the interlocking part 12 is not limited to the shape illustrated in FIG. 2B or the shape of a V-shaped interlocking part. For example, the interlocking part 12 may be U-shaped or may be W-shaped. The interlocking part 12 may also be N-shaped. As long as the interlocking part 12 includes the inclined portions 121, the cross-sectional shape of the interlocking part 12 is not particularly limited.

The inclined portions 121 of the interlocking part 12 correspond to the portions where the sheet thickness of the rotor core starting material 10 is thinnest. A sheet thickness PT₁₂₁ of the inclined portion 121 is equal to or less than 85% of a sheet thickness PT₁₄ of the flat portion 14 of the rotor core starting material 10. Note that, the sheet thickness PT₁₄ of the flat portion 14 corresponds to the sheet thickness t of the non-oriented electrical steel sheet that is the starting material.

As described above, in the present embodiment the sheet thickness PT₁₂₁ of the inclined portion 121 of the interlocking part 12 is thinner than the sheet thickness PT₁₄ of the flat portion 14. Therefore, the inclination angle of the inclined portion 121 with respect to the flat portion 14 can be made steep. As a result, the size of the inclined portion 121 when the rotor core starting material 10 is viewed in plan view can be kept small. Furthermore, by making the inclination angle of the inclined portion 121 with respect to the flat portion 14 steep, the fixing force when the interlocking parts 12 are fitted together is increased.

In a case where the interlocking part 12 including the inclined portions 121 is formed, the sheet thickness of the inclined portions 121 is thin. Consequently, it is necessary for the rotor core starting material 10 to have ductility to an extent such that the inclined portions 121 can be formed. As described above, because the rotor core starting material 10 satisfies feature 1 to feature 5, the rotor core starting material 10 is excellent in breaking elongation. Therefore, the interlocking part 12 including the inclined portions 121 where the sheet thickness PT₁₂₁ is equal to or less than 85% of the sheet thickness PT₁₄ of the flat portion 14 can be formed.

Preferably, the sheet thickness PT₁₂₁ of the inclined portion 121 is equal to or less than 83% of the sheet thickness PT₁₄ of the flat portion 14, and further preferably is 80% or less. Preferably, the sheet thickness PT₁₂₁ is not less than 50% of the sheet thickness PT₁₄, more preferably is 60% or more, and further preferably is 70% or more.

Preferably, a Vickers hardness H₁₄ at the center position of the sheet thickness of the flat portion 14 of the rotor core starting material 10 is 180 HV or more. A Vickers hardness H₁₂₁ at the center position of the sheet thickness of the inclined portion 121 of the interlocking part 12 of the rotor core starting material 10 is H₁₄ + 40 HV or more.

As described above, the rotor core starting material 10 satisfies feature 1 to feature 5. Therefore, the rotor core starting material 10 has excellent strength. As a result, the Vickers hardness of the interlocking part 12 and the Vickers hardness of the flat portion 14 are also high.

### [Method for measuring sheet thickness PT₁₄ of flat portion 14 and sheet thickness PT₁₂₁ of inclined portion 121]

The sheet thickness PT₁₄ of the flat portion 14 and the sheet thickness PT₁₂₁ of the inclined portion 121 are determined by the following method. A test specimen including the cross section illustrated in FIG. 2B is taken from one rotor core starting material 10. The sheet thickness of the flat portion is measured at five arbitrary locations on the flat portion 14, and the arithmetic average value of the obtained five values is defined as the sheet thickness PT₁₄ (mm) of the flat portion 14. The sheet thickness PT₁₄ (mm) is to be made a value to the third decimal place obtained by rounding off to the third decimal place of the obtained arithmetic average value. In addition, the sheet thickness is measured at five arbitrary locations on the inclined portion 121, and the arithmetic average value of the obtained five values is defined as the sheet thickness PT₁₂₁ (mm) of the inclined portion 121. The sheet thickness PT₁₂₁ (mm) is to be made a value to the third decimal place obtained by rounding off to the third decimal place of the obtained arithmetic average value. The measurement may be performed using a micrometer, or using a non-contact measuring device such as a sheet thickness measuring instrument that uses a laser triangulation method.

### [Method for measuring Vickers hardness H₁₄ of flat portion 14 and Vickers hardness H₁₂₁ of inclined portion 121]

The Vickers hardness H₁₄ of the flat portion 14 and the Vickers hardness H₁₂₁ of the inclined portion 121 are determined by the following method. A test specimen including the cross section illustrated in FIG. 2B is taken from the rotor core starting material 10. On the aforementioned cross section of the test specimen, a Vickers hardness test prepared according to JIS Z 2244-1:2020 is performed at five arbitrary locations at the center position of the sheet thickness of the inclined portion 121. The test force is to be set to 1 N. Note that, if the Vickers hardness tester is only capable of controlling the test force in kgf units, the test force is to be set to 0.1 kgf. The arithmetic average value of the obtained Vickers hardness values is defined as the Vickers hardness H₁₂₁ (HV) of the inclined portion 121. The Vickers hardness H₁₂₁ (HV) is to be made an integer that is obtained by rounding off decimals of the obtained arithmetic average value.

Similarly, on the aforementioned cross section of the test specimen, a Vickers hardness test prepared according to JIS Z 2244-1:2020 is performed at five arbitrary locations at the center position of the sheet thickness of the flat portion 14. The test force is to be set to 1 N. Note that, if the Vickers hardness tester is only capable of controlling the test force in kgf units, the test force is to be set to 0.1 kgf. The arithmetic average value of the obtained Vickers hardness values is defined as the Vickers hardness H₁₄ (HV) of the flat portion 14. The Vickers hardness H₁₄ (HV) is to be made an integer that is obtained by rounding off decimals of the obtained arithmetic average value.

### [Regarding stator core]

The stator core of the present embodiment is produced using the non-oriented electrical steel sheet of the present embodiment as a starting material.

FIG. 3 is a plan view of a stator core 2. Referring to FIG. 3, the stator core 2 includes a plurality of stator core starting materials 20. The stator core starting material 20 is an annular sheet shape. The stator core 2 is constituted by a plurality of the stator core starting materials 20 that are stacked on top of one another.

The stator core starting material 20 includes a plurality of teeth portions 21. The plurality of teeth portions 21 are arranged with a gap between the respective teeth portions 21 in the circumferential direction of the stator core starting material 20. Each of the teeth portions 21 extends in the radial direction of the stator core starting material 20.

The stator core starting material 20 is produced by punching the non-oriented electrical steel sheet of the present embodiment, and thereafter performing strain relief annealing. Therefore, the stator core starting material 20 satisfies feature 1 to feature 4, and furthermore, F4 defined by Formula (4) is not less than an iron loss W_{10/400}. Therefore, the stator core 2 has excellent magnetic flux density and excellent iron loss. In addition, similarly to the rotor core starting material 10, the stator core starting material 20 is excellent in breaking elongation in a state after punching prior to the strain relief annealing. Specifically, the breaking elongation of the stator core starting material 20 is 20% or more.

### [Method for measuring magnetic properties of stator core starting material]

The magnetic flux density and iron loss of the stator core starting material can be measured based on the single sheet test (SST) specified in JIS C 2556:2015.

Specifically, the stator core starting material is separated from the stator core. If the stator core starting materials are fixed together with adhesive, the stator core starting materials may be heated to a temperature range of 300 to 450°C to soften the adhesive, and thereafter the stator starting materials may be separated from the stator core.

An SST test specimen is taken from the separated stator core starting material. Note that, to avoid the occurrence of processing strain, wire cutting is used to collect the SST test specimen. The size of the SST test specimen is made, for example, 55 mm × 55 mm × the sheet thickness.

Note that, in a case where an SST test specimen with dimensions of 55 mm × 55 mm × the sheet thickness cannot be taken from the stator core starting material, two L-direction SST test specimens with dimensions of 16 mm in the L direction (rolling direction) × 8 mm in width × the sheet thickness are to be taken, and two C-direction SST test specimens with dimensions of 16 mm in the C direction (direction perpendicular to the rolling direction) × 8 mm in width × the sheet thickness are to be taken. To measure the iron loss in the L direction, the two L-direction SST test specimens are arranged in a 16 mm × 16 mm square shape and the test is conducted. To measure the iron loss in the C direction, the two C-direction SST test specimens are arranged in a 16 mm × 16 mm square shape and the test is conducted.

The iron loss W_{5/1000(L)} (W/kg) in the L direction and the iron loss W_{5/1000(C)} (W/kg) in the C direction are determined by the aforementioned single sheet test (SST test) using the SST test specimens. The arithmetic average value of the iron loss W_{5/1000(L)} (W/kg) in the L direction and the iron loss W_{5/1000(C)} (W/kg) in the C direction is defined as an iron loss W_{5/1000(L+C)} (W/kg). The obtained iron loss W_{5/1000(L+C)} is converted to a value corresponding to a measurement value obtained with an Epstein tester as specified in JIS C 2550-1:2011 and JIS C 2550-3:2019, and is defined as an Epstein equivalent value.

The Epstein equivalent value can be determined by the following method. An Epstein test specimen and an SST test specimen are taken in advance from the same non-oriented electrical steel sheet. The iron loss W_{5/1000(EP)} (W/kg) of the Epstein test specimen is determined by the method described above in the section [Method for measuring iron loss W_{5/1000} of non-oriented electrical steel sheet]. The iron loss W_{5/1000(L+C)} (W/kg) of the SST test specimen is determined by the SST test described above. A conversion factor K is determined by the following formula based on the obtained iron loss W_{5/1000(EP)} (W/kg) for the Epstein test specimen and the obtained iron loss W_{5/1000(L+C)} (W/kg) for the SST test specimen. 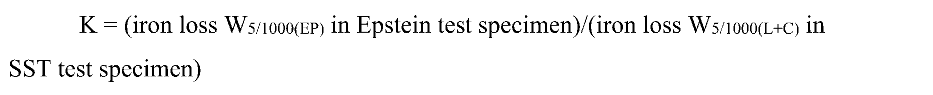 K = (iron loss W5/1000(EP) in Epstein test specimen)/(iron loss W5/1000(L+C) in SST test specimen)

The measurement value (iron loss W_{5/1000(L+C)}) of the stator obtained by the SST test is multiplied by the aforementioned K to calculate the iron loss W_{5/1000} (W/kg) for the Epstein equivalent value. The calculated Epstein equivalent value is defined as the iron loss W_{5/1000} (W/kg) of the stator core.

Note that, in a case where an Epstein test specimen cannot be taken from the stator core starting material, a non-oriented electrical steel sheet that has substantially the same density, magnetic flux density B50, and iron loss W_{5/1000(L+C)} as the density of the stator core starting material and the magnetic flux density B50 and iron loss W_{5/1000(L+C)} in the SST test is to be prepared. Specifically, in the prepared non-oriented electrical steel sheet, the density is to be within the range of ± 1% of the density of the stator core starting material, the iron loss W_{5/1000(L+C)} obtained with the SST test specimen is to be within the range of ±5% of the iron loss W_{5/1000(L+C)} obtained with the SST test specimen of the stator core starting material, and the magnetic flux density B50 obtained with the SST test specimen is to be within the range of ±2% of the magnetic flux density B50 obtained with the SST test specimen of the stator core starting material. The prepared non-oriented electrical steel sheet is used to determine the iron loss W_{5/1000(EP)} using an Epstein test specimen by the method described above in the section [Method for measuring iron loss W_{5/1000} of non-oriented electrical steel sheet]. The determined iron loss W_{5/1000(EP)} (W/kg) is defined as the Epstein equivalent value.

Preferably, the stator core starting material 20 may further include a flat portion 24 and an interlocking part 22, as illustrated in FIG. 3. The interlocking part 22 is an indentation formed in the stator core starting material 20. When a plurality of stator core starting materials 20 are stacked, the interlocking parts 22 of the stator core starting materials 20 that vertically overlap one another fit together and are fixed to one another. That is, the interlocking part 22 serves the same function as the interlocking part 12. Unlike the interlocking part 22, the flat portion 24 is a flat region. The flat portion 24 is a portion that serves as the base material of the stator core starting material 20, and the sheet thickness of the flat portion 24 corresponds to the sheet thickness of the non-oriented electrical steel sheet that is the starting material.

When forming the stator core 2 using the interlocking parts 22, it is not necessary to fix the stator core starting materials 20 together with adhesive. Therefore, when the stator core starting materials 20 are fixed together using the interlocking parts 22, no compressive stress like the compressive stress caused by an adhesive will be applied. In the case of the stator core 2, in addition, after the plurality of stator core starting materials 20 have been fixed using the interlocking parts 22, strain relief annealing is performed. Therefore, strain introduced into the interlocking parts 22 during formation of the interlocking parts 22 is also removed. As a result, in the stator core 2, not only is there no application of compressive stress that is applied in a case where adhesive is used, but furthermore, the influence of strain introduced when forming the interlocking parts 22 is also sufficiently suppressed. Therefore, the stator core 2 has excellent iron loss.

The structure of the interlocking part 22 is the same as the structure of the interlocking part 12. Referring to FIG. 2A and FIG. 2B, the interlocking part 22 includes a pair of inclined portions 221. Each of the inclined portions 221 is formed to be inclined with respect to a portion other than the interlocking part 22 of the stator core starting material 20. The interlocking part 22 may include a bottom portion 222 between the pair of inclined portions 221. Further, the interlocking part 22 may be a so-called "V-shaped interlocking part" which does not include the bottom portion 222 and in which the lower ends of the pair of inclined portions 221 are connected. By including the inclined portions 221 in the interlocking part 22, the fixing force generated when the interlocking parts 22 are fitted together is increased.

Note that, similarly to the interlocking part 12, the interlocking part 22, for example, may be U-shaped or may be W-shaped. The interlocking part 22 may also be N-shaped. As long as the interlocking part 22 includes the inclined portions 221, the cross-sectional shape of the interlocking part 22 is not particularly limited.

The inclined portions 221 of the interlocking part 22 correspond to the portions where the sheet thickness of the stator core starting material 20 is thinnest. A sheet thickness PT₂₂₁ of the inclined portion 221 is equal to or less than 85% of a sheet thickness PT₂₄ of the flat portion 24 that is the portion other than the interlocking part 22 of the stator core starting material 20. Note that, the sheet thickness PT₂₄ of the flat portion 24 corresponds to the sheet thickness t of the non-oriented electrical steel sheet that is the starting material.

As described above, in the present embodiment the sheet thickness PT₂₂₁ of the inclined portion 221 of the interlocking part 22 is thinner than the sheet thickness PT₂₄ of the flat portion 24. Therefore, the inclination angle of the inclined portion 221 with respect to the flat portion 24 can be made steep. As a result, the size of the inclined portion 221 when the stator core starting material 20 is viewed in plan view can be kept small. Furthermore, by making the inclination angle of the inclined portion 221 with respect to the flat portion 24 steep, the fixing force when the interlocking parts 22 are fitted together is increased.

In a case where the interlocking part 22 including the inclined portions 221 is formed, the sheet thickness of the inclined portions 221 is thin. Consequently, it is necessary for the stator core starting material 20 to have ductility to an extent such that the inclined portions 221 can be formed. As described above, the stator core starting material 20 satisfies feature 1 to feature 4, and in addition, F4 defined by Formula (4) is not less than an iron loss W_{10/400}. Thus, the stator core starting material 20 is excellent in breaking elongation. Therefore, the interlocking part 22 including the inclined portions 221 where the sheet thickness PT₂₂₁ is equal to or less than 85% of the sheet thickness PT₂₄ of the flat portion 24 can be formed.

Preferably, the sheet thickness PT₂₂₁ of the inclined portion 221 is equal to or less than 83% of the sheet thickness PT₂₄ of the flat portion 24, and more preferably is 80% or less. Preferably, the sheet thickness PT₂₂₁ is not less than 50% of the sheet thickness PT₂₄, further preferably is 60% or more, and further preferably is 70% or more.

Preferably, a Vickers hardness H₂₄ at the center position of the sheet thickness of the flat portion 24 of the stator core starting material 20 is 175 HV or more, and a Vickers hardness H₂₂₁ at the center position of the sheet thickness of the inclined portion 221 of the interlocking part 22 of the stator core starting material 20 is within ± 10 HV of the Vickers hardness H₂₄ of the flat portion 24. Because the stator core starting material 20 is subjected to strain relief annealing, strain is removed and, as a result, the hardness is lowered.

### [Method for measuring sheet thickness PT₂₄ of flat portion 24 and sheet thickness PT₂₂₁ of inclined portion 221]

The sheet thickness PT₂₄ of the flat portion 24 and the sheet thickness PT₂₂₁ of the inclined portion 221 are determined by the following method. A test specimen including the cross section illustrated in FIG. 2B is taken from one stator core starting material 10. The sheet thickness of the flat portion is measured at five arbitrary locations on the flat portion 24, and the arithmetic average value of the obtained five values is defined as the sheet thickness PT₂₄ (mm) of the flat portion 24. The sheet thickness PT₂₄ (mm) is to be made an integer that is obtained by rounding off decimals of the obtained arithmetic average value. In addition, the sheet thickness is measured at five arbitrary locations on the inclined portion 221, and the arithmetic average value of the obtained five values is defined as the sheet thickness PT₂₂₁ of the inclined portion 221 (mm). The sheet thickness PT₂₂₁ (mm) is to be made an integer that is obtained by rounding off decimals of the obtained arithmetic average value. The measurement may be performed using a micrometer, or using a non-contact measuring device such as a sheet thickness measuring instrument that uses a laser triangulation method.

### [Method for measuring Vickers hardness H₂₄ of flat portion 24 and Vickers hardness H₂₂₁ of inclined portion 221]

The Vickers hardness H₂₄ of the flat portion 24 and the Vickers hardness H₂₂₁ of the inclined portion 221 are determined by the following method. A test specimen including the cross section illustrated in FIG. 2B is taken from the stator core starting material 20. On the aforementioned cross section of the test specimen, a Vickers hardness test prepared according to JIS Z 2244-1:2020 is performed at five arbitrary locations at the center position of the sheet thickness of the inclined portion 221. The test force is to be set to 1 N. Note that, if the Vickers hardness tester is only capable of controlling the test force in kgf units, the test force is to be set to 0.1 kgf. The arithmetic average value of the obtained Vickers hardness values is defined as the Vickers hardness H₂₂₁ (HV) of the inclined portion 221. The Vickers hardness H₂₂₁ (HV) is to be made an integer that is obtained by rounding off decimals of the obtained arithmetic average value.

Similarly, on the aforementioned cross section of the test specimen, a Vickers hardness test prepared according to JIS Z 2244-1:2020 is performed at five arbitrary locations at the center position of the sheet thickness of the flat portion 24. The test force is to be set to 1 N. The arithmetic average value of the obtained Vickers hardness values is defined as the Vickers hardness H₂₄ (HV) of the flat portion 24. The Vickers hardness H₂₄ (HV) is to be made an integer that is obtained by rounding off decimals of the obtained arithmetic average value.

### [Method for producing rotor core 1 and stator core 2]

The rotor core 1 and the stator core 2 are produced by the following method.

The rotor core starting materials 10 and the stator core starting materials 20 are produced by punching from the non-oriented electrical steel sheet of the present embodiment. Before performing the punching, the interlocking parts 12 are formed by press working in regions that will become the rotor core starting materials 10. Similarly, the interlocking parts 22 are formed by press working in regions that will become the stator core starting materials 20.

After the interlocking parts 12 are formed, the rotor core starting materials 10 are consecutively punched out. At such time, a rotor core starting material 10 that is newly punched out is stacked on top of a rotor core starting material 10 that has already been punched out, and the interlocking parts 12 are fitted together. In other words, operations to stack and fit together the rotor core starting materials 10 are also performed while performing the punching. The rotor core 1 is produced by the above process.

Similarly, after the interlocking parts 22 are formed, the stator core starting materials 20 are consecutively punched out. At such time, a stator core starting material 20 that is newly punched out is stacked on top of a stator core starting material 20 that has already been punched out, and the interlocking parts 22 are fitted together. In other words, operations to stack and fit together the stator core starting materials 20 are also performed while performing the punching.

The stacked plurality of stator core starting materials 20 is subjected to strain relief annealing. The strain relief annealing is performed, for example, for 1 to 10 hours at 800 to 850°C. The stator core 2 is produced by the above process.

### [Regarding motor]

The motor of the present embodiment includes the rotor core described above and the stator core described above. Because the motor of the present embodiment includes the rotor core and the stator core of the present embodiment, high strength is obtained in the rotor core. Furthermore, excellent magnetic flux density and iron loss are obtained in the motor of the present embodiment.

### EXAMPLE 1

Non-oriented electrical steel sheets having the chemical compositions shown in Table 1 (Table 1A, Table 1B, and Table 1C) were produced by the following method.

### [Table 1A]

**TABLE 1A**

| Test Number | Chemical Composition (unit is mass%; balance is Fe and impurities) | | | | | | | |
|---|---|---|---|---|---|---|---|---|
| | Si | Mn | P | S | Al | C | N | O |
| 1 | 2.6 | 0.5 | 0.01 | 0.0010 | 0.3 | 0.0021 | 0.0018 | 0.0012 |
| 2 | 2.9 | 0.2 | 0.02 | 0.0007 | 0.5 | 0.0027 | 0.0021 | 0.0028 |
| 3 | 3.1 | 0.3 | 0.01 | 0.0015 | 0.6 | 0.0027 | 0.0021 | 0.0011 |
| 4 | 2.1 | 0.7 | 0.04 | 0.0010 | 1.1 | 0.0019 | 0.0029 | 0.0017 |
| 5 | 2.5 | 0.4 | 0.01 | 0.0004 | 0.6 | 0.0026 | 0.0023 | 0.0013 |
| 6 | 3.1 | 1.3 | 0.01 | 0.0021 | 0.2 | 0.0024 | 0.0023 | 0.0015 |
| 7 | 3.7 | 0.4 | 0.02 | 0.0017 | 0.1 | 0.0012 | 0.0026 | 0.0014 |
| 8 | 2.2 | 0.3 | 0.05 | 0.0010 | 0.3 | 0.0016 | 0.0016 | 0.0010 |
| 9 | 2.9 | 0.5 | 0.03 | 0.0016 | 0.5 | 0.0023 | 0.0017 | 0.0029 |
| 10 | 3.0 | 0.3 | 0.06 | 0.0018 | 0.3 | 0.0014 | 0.0019 | 0.0023 |
| 11 | 2.1 | 0.2 | 0.02 | 0.0008 | 1.3 | 0.0020 | 0.0028 | 0.0014 |
| 12 | 3.4 | 0.3 | 0.01 | 0.0019 | 0.3 | 0.0025 | 0.0029 | 0.0013 |
| 13 | 3.1 | 0.8 | 0.02 | 0.0010 | 0.4 | 0.0025 | 0.0025 | 0.0010 |
| 14 | 2.9 | 0.6 | 0.06 | 0.0019 | 0.6 | 0.0026 | 0.0024 | 0.0013 |
| 15 | 2.8 | 0.3 | 0.01 | 0.0017 | 0.7 | 0.0018 | 0.0022 | 0.0024 |
| 16 | 2.7 | 0.5 | 0.03 | 0.0010 | 0.5 | 0.0022 | 0.0021 | 0.0023 |
| 17 | 3.0 | 0.7 | 0.02 | 0.0008 | 0.3 | 0.0026 | 0.0019 | 0.0027 |
| 18 | 3.0 | 0.4 | 0.02 | 0.0011 | 0.3 | 0.0021 | 0.0019 | 0.0018 |
| 19 | 3.1 | 0.2 | 0.01 | 0.0014 | 0.4 | 0.0026 | 0.0023 | 0.0021 |
| 20 | 2.7 | 0.4 | 0.01 | 0.0011 | 0.7 | 0.0021 | 0.0024 | 0.0023 |
| 21 | 2.6 | 0.7 | 0.04 | 0.0013 | 0.6 | 0.0029 | 0.0024 | 0.0021 |
| 22 | 2.8 | 0.5 | 0.02 | 0.0008 | 0.5 | 0.0022 | 0.0027 | 0.0021 |
| 23 | 3.0 | 0.8 | 0.01 | 0.0007 | 0.3 | 0.0024 | 0.0026 | 0.0025 |
| 24 | 3.1 | 0.3 | 0.01 | 0.0014 | 0.4 | 0.0026 | 0.0011 | 0.0024 |
| 25 | 2.8 | 0.4 | 0.03 | 0.0008 | 0.3 | 0.0024 | 0.0011 | 0.0024 |
| 26 | 2.9 | 1.0 | 0.03 | 0.0021 | 0.4 | 0.0017 | 0.0013 | 0.0021 |
| 27 | 3.4 | 0.2 | 0.03 | 0.0014 | 0.4 | 0.0028 | 0.0018 | 0.0027 |
| 28 | 2.9 | 0.7 | 0.04 | 0.0016 | 0.5 | 0.0034 | 0.0024 | 0.0014 |
| 29 | 3.6 | 0.1 | 0.03 | 0.0017 | 0.2 | 0.0027 | 0.0015 | 0.0010 |
| 30 | 2.1 | 0.2 | 0.04 | 0.0005 | 0.3 | 0.0030 | 0.0034 | 0.0020 |
| 31 | 2.3 | 0.2 | 0.05 | 0.0016 | 0.1 | 0.0035 | 0.0026 | 0.0015 |
| 32 | 2.2 | 1.4 | 0.03 | 0.0018 | 1.1 | 0.0022 | 0.0029 | 0.0023 |
| 33 | 3.2 | 0.6 | 0.02 | 0.0018 | 1.3 | 0.0031 | 0.0024 | 0.0010 |
| 34 | 2.4 | 0.4 | 0.02 | 0.0023 | 0.3 | 0.0021 | 0.0019 | 0.0014 |
| 35 | 2.3 | 0.3 | 0.02 | 0.0009 | 0.4 | 0.0032 | 0.0031 | 0.0010 |
| 36 | 2.4 | 0.4 | 0.06 | 0.0007 | 0.7 | 0.0035 | 0.0033 | 0.0012 |
| 37 | 2.2 | 0.5 | 0.05 | 0.0007 | 0.3 | 0.0015 | 0.0021 | 0.0017 |
| 38 | 2.5 | 0.6 | 0.03 | 0.0008 | 0.4 | 0.0022 | 0.0026 | 0.0018 |
| 39 | 2.9 | 0.3 | 0.05 | 0.0006 | 0.5 | 0.0024 | 0.0023 | 0.0016 |
| 40 | 2.7 | 0.5 | 0.06 | 0.0013 | 0.5 | 0.0026 | 0.0021 | 0.0013 |
| 41 | 3.0 | 0.4 | 0.03 | 0.0009 | 0.1 | 0.0031 | 0.0032 | 0.0016 |

### [Table 1B]

**TABLE 1B**

| Test Number | Chemical Composition (unit is mass%; balance is Fe and impurities) | | | | | | | | | |
|---|---|---|---|---|---|---|---|---|---|---|
| | Cr | Ti | Mo | Ni | Cu | Sn | Sb | Ca | Mg | REM |
| 1 | - | - | - | - | - | - | - | - | - | - |
| 2 | - | - | - | - | - | - | - | - | - | - |
| 3 | - | - | - | - | - | - | - | - | - | - |
| 4 | 0.02 | - | - | - | - | - | - | - | - | - |
| 5 | - | 0.0015 | - | - | - | - | - | - | - | - |
| 6 | - | - | 0.013 | - | - | - | - | - | - | - |
| 7 | - | - | - | 0.02 | - | - | - | - | - | - |
| 8 | - | - | - | - | 0.06 | - | - | - | - | - |
| 9 | - | - | - | - | - | 0.021 | - | - | - | - |
| 10 | - | - | - | - | - | - | 0.015 | - | - | - |
| 11 | - | - | - | - | - | - | - | 0.0023 | - | - |
| 12 | - | - | - | - | - | - | - | - | 0.0010 | - |
| 13 | - | - | - | - | - | - | - | - | - | 0.0025 |
| 14 | - | - | - | - | - | - | - | - | - | - |
| 15 | - | - | - | - | - | - | - | - | - | - |
| 16 | - | - | - | - | - | - | - | - | - | - |
| 17 | - | - | - | - | - | - | - | - | - | - |
| 18 | - | - | - | - | - | - | - | - | - | - |
| 19 | - | - | - | - | - | - | - | - | - | - |
| 20 | - | - | - | - | - | - | - | - | - | - |
| 21 | - | - | - | - | - | - | - | - | - | - |
| 22 | - | - | - | - | - | - | - | - | - | - |
| 23 | - | - | - | - | - | - | - | - | - | - |
| 24 | - | - | - | - | - | - | - | - | - | - |
| 25 | 0.01 | 0.0007 | 0.018 | 0.31 | 0.15 | 0.015 | 0.001 | 0.0005 | - | 0.0016 |
| 26 | 0.06 | 0.0016 | 0.026 | 0.04 | 0.01 | 0.053 | 0.003 | 0.0013 | 0.0008 | 0.0011 |
| 27 | 0.40 | 0.0021 | 0.073 | 0.02 | 0.03 | 0.076 | - | 0.0011 | 0.0015 | - |
| 28 | 0.31 | 0.0018 | 0.006 | 0.01 | 0.02 | 0.025 | - | 0.0031 | - | 0.0042 |
| 29 | 0.08 | 0.0011 | 0.007 | 0.08 | 0.06 | 0.026 | 0.011 | 0.0013 | 0.0009 | 0.0036 |
| 30 | - | - | - | - | - | - | - | - | - | - |
| 31 | 0.03 | 0.0013 | 0.013 | 0.03 | 0.02 | 0.022 | - | 0.0005 | 0.0007 | - |
| 32 | - | - | - | - | - | - | - | - | - | - |
| 33 | 0.04 | 0.0021 | 0.005 | 0.01 | 0.05 | 0.002 | - | - | - | - |
| 34 | - | - | - | - | - | - | - | - | - | - |
| 35 | 0.07 | 0.0009 | 0.013 | 0.03 | 0.02 | 0.022 | - | - | 0.0009 | - |
| 36 | - | - | - | - | - | - | - | - | - | - |
| 37 | 0.05 | 0.0013 | 0.013 | 0.04 | 0.02 | 0.026 | - | 0.0012 | - | - |
| 38 | 0.01 | 0.0008 | 0.011 | 0.03 | 0.02 | 0.023 | - | - | - | - |
| 39 | 0.02 | 0.0011 | 0.013 | 0.03 | 0.03 | 0.022 | - | - | - | - |
| 40 | 0.01 | 0.0013 | 0.005 | 0.01 | 0.02 | 0.021 | - | - | - | - |
| 41 | 0.05 | 0.0016 | 0.017 | 0.03 | 0.02 | 0.002 | - | - | - | - |

### [Table 1C]

**TABLE 1C**

| Test Number | Chemical Composition (unit is mass%; balance is Fe and impurities) | | | | | | | | | | |
|---|---|---|---|---|---|---|---|---|---|---|---|
| | B | Zn | Ge | As | Co | V | Se | Zr | Nb | Pb | Ga |
| 1 | - | - | - | - | - | - | - | - | - | - | - |
| 2 | - | - | - | - | - | - | - | - | - | - | - |
| 3 | - | - | - | - | - | - | - | - | - | - | - |
| 4 | - | - | - | - | - | - | - | - | - | - | - |
| 5 | - | - | - | - | - | - | - | - | - | - | - |
| 6 | - | - | - | - | - | - | - | - | - | - | - |
| 7 | - | - | - | - | - | - | - | - | - | - | - |
| 8 | - | - | - | - | - | - | - | - | - | - | - |
| 9 | - | - | - | - | - | - | - | - | - | - | - |
| 10 | - | - | - | - | - | - | - | - | - | - | - |
| 11 | - | - | - | - | - | - | - | - | - | - | - |
| 12 | - | - | - | - | - | - | - | - | - | - | - |
| 13 | - | - | - | - | - | - | - | - | - | - | - |
| 14 | 0.0015 | - | - | - | - | - | - | - | - | - | - |
| 15 | - | - | - | - | - | 0.0010 | - | - | - | - | - |
| 16 | - | - | - | - | 0.0052 | - | - | - | - | - | - |
| 17 | - | 0.0011 | - | - | - | - | - | - | - | - | - |
| 18 | - | - | - | - | - | - | - | - | - | - | 0.0015 |
| 19 | - | - | 0.0013 | - | - | - | - | - | - | - | - |
| 20 | - | - | - | 0.0036 | - | - | - | - | - | - | - |
| 21 | - | - | - | - | - | - | 0.0014 | - | - | - | - |
| 22 | - | - | - | - | - | - | - | 0.0017 | - | - | - |
| 23 | - | - | - | - | - | - | - | - | 0.0012 | - | - |
| 24 | - | - | - | - | - | - | - | - | - | 0.0015 | - |
| 25 | 0.0002 | 0.0014 | - | 0.0035 | 0.0063 | 0.0011 | - | - | 0.0006 | - | - |
| 26 | - | - | 0.0014 | 0.0028 | - | - | 0.0011 | 0.0008 | 0.0014 | 0.0013 | 0.0012 |
| 27 | - | 0.0007 | - | - | - | 0.0015 | - | - | - | 0.0009 | - |
| 28 | 0.0005 | 0.0013 | 0.0013 | 0.0038 | 0.0056 | - | - | 0.0009 | - | - | - |
| 29 | - | - | - | 0.0042 | - | 0.0013 | - | - | - | - | 0.0011 |
| 30 | | - | - | - | - | - | - | - | - | - | - |
| 31 | - | - | - | - | - | - | - | - | - | - | - |
| 32 | - | - | - | - | - | - | - | - | - | - | - |
| 33 | 0.0005 | 0.0008 | 0.0021 | 0.0026 | - | 0.0011 | - | 0.0011 | 0.0010 | 0.0009 | - |
| 34 | | - | - | - | - | - | - | - | - | - | - |
| 35 | - | - | 0.0014 | - | - | 0.0013 | 0.0011 | 0.0019 | - | - | - |
| 36 | | - | - | - | - | - | - | - | - | - | - |
| 37 | - | 0.0014 | - | 0.0026 | - | - | - | - | 0.0013 | - | 0.0013 |
| 38 | - | - | - | 0.0022 | - | - | - | 0.0008 | - | - | - |
| 39 | - | - | - | 0.0043 | - | - | - | 0.0011 | - | - | - |
| 40 | - | - | - | 0.0020 | - | - | - | 0.0014 | - | - | - |
| 41 | - | - | - | 0.0044 | - | - | - | 0.0016 | - | - | - |

Hot rolling was performed on slabs (billets) to produce hot-rolled steel sheets having a sheet thickness of 2.0 mm. The slab heating temperature was 1100°C to 1150°C. The rolling finishing temperature was within the range of 800°C or more and 850°C or less. The coiling temperature was 700°C or less. The hot-rolled steel sheets were subjected to hot-rolled sheet annealing in which the hot-rolled steel sheets were held at 1000°C for one minute. The steel sheets after the hot-rolled sheet annealing were subjected to cold rolling to produce cold-rolled steel sheets of various thicknesses.

The produced cold-rolled steel sheets were subjected to final annealing. A peak metal temperature T1 (°C), a tension TE (kgf/mm²), an average cooling rate CR (°C/sec), and RS in the final annealing are shown in Table 2. Note that, "T" in the column "1.0 ≥ TE ≥ FA" in Table 2 means that the tension TE satisfied Formula (A). Further, "F" means that the tension TE did not satisfy Formula (A).

A non-oriented electrical steel sheet of each test number was produced by the above production process. The sheet thickness (mm) of each test number is shown in the column "Sheet Thickness t (mm)" in Table 2. Further, the values of F1 to F4 of each test number are shown in the "F1" column, "F2" column, "F3" column, and "F4" column, respectively in Table 2. In Table 2, "T" in the column "F3 ≤ W_{5/1000}" means that F3 was equal to or less than the iron loss W_{5/1000}. Further, "F" means that F3 was more than the iron loss W_{5/1000}. In addition, "T" in the column "W_{10/400} ≤ F4" means that F4 was equal to or more than W_{10/400} when the non-oriented electrical steel sheet was heat-treated for one hour at 800°C. Further, "F" means that F4 was less than W_{10/400} when the non-oriented electrical steel sheet was heat-treated for one hour at 800°C.

### [Table 2]

**TABLE 2**

| Test Number | T1 (°C) | TE (kgf/ mm²) | 1.0≥TE≥FA | Cooling Rate CR (°C/sec) | RS | Sheet Thickness t (mm) | F1 | F2 | F3 | F3 ≤W_{5/1000} | F4 | W_{10/400} ≤F4 |
|---|---|---|---|---|---|---|---|---|---|---|---|---|
| 1 | 780 | 0.6 | T | 40 | 0.18 | 0.25 | 12.3 | 6.6 | 21.9 | T | 12.5 | T |
| 2 | 800 | 0.6 | T | 35 | 0.33 | 0.25 | 13.5 | 7.5 | 17.1 | T | 11.8 | T |
| 3 | 850 | 0.4 | T | 45 | 0.09 | 0.25 | 14.8 | 8.3 | 13.3 | T | 11.3 | T |
| 4 | 780 | 0.5 | T | 45 | 0.04 | 0.25 | 13.1 | 8.2 | 22.8 | T | 11.9 | T |
| 5 | 790 | 0.6 | T | 40 | 0.21 | 0.27 | 12.6 | 7.2 | 22.4 | T | 12.9 | T |
| 6 | 860 | 0.5 | T | 25 | 0.42 | 0.30 | 15.6 | 8.1 | 14.7 | T | 12.4 | T |
| 7 | 880 | 0.4 | T | 30 | 0.28 | 0.27 | 15.9 | 8.1 | 8.6 | T | 11.5 | T |
| 8 | 730 | 0.7 | T | 28 | 0.35 | 0.20 | 10.3 | 5.6 | 26.2 | T | 11.8 | T |
| 9 | 810 | 0.5 | T | 45 | 0.11 | 0.25 | 14.1 | 7.8 | 16.2 | T | 11.6 | T |
| 10 | 800 | 0.5 | T | 40 | 0.20 | 0.25 | 13.5 | 7.2 | 16.7 | T | 11.9 | T |
| 11 | 770 | 0.6 | T | 40 | 0.15 | 0.27 | 12.7 | 8.3 | 23.8 | T | 12.7 | T |
| 12 | 830 | 0.5 | T | 38 | 0.23 | 0.20 | 15.1 | 8.0 | 9.3 | T | 9.8 | T |
| 13 | 800 | 0.5 | T | 42 | 0.17 | 0.15 | 15.2 | 8.2 | 9.6 | T | 8.3 | T |
| 14 | 810 | 0.5 | T | 46 | 0.09 | 0.15 | 14.6 | 8.2 | 11.5 | T | 8.4 | T |
| 15 | 800 | 0.6 | T | 40 | 0.24 | 0.25 | 13.9 | 8.0 | 16.8 | T | 11.6 | T |
| 16 | 790 | 0.5 | T | 40 | 0.18 | 0.25 | 13.3 | 7.4 | 19.0 | T | 11.9 | T |
| 17 | 810 | 0.7 | T | 30 | 0.49 | 0.20 | 14.3 | 7.6 | 13.6 | T | 10.0 | T |
| 18 | 800 | 0.5 | T | 25 | 0.42 | 0.27 | 13.7 | 7.3 | 17.2 | T | 12.4 | T |
| 19 | 820 | 0.6 | T | 37 | 0.30 | 0.25 | 14.0 | 7.6 | 14.9 | T | 11.6 | T |
| 20 | 800 | 0.6 | T | 40 | 0.24 | 0.27 | 13.7 | 7.9 | 18.7 | T | 12.3 | T |
| 21 | 800 | 0.5 | T | 45 | 0.11 | 0.25 | 13.6 | 7.7 | 19.1 | T | 11.8 | T |
| 22 | 790 | 0.6 | T | 40 | 0.21 | 0.20 | 13.7 | 7.6 | 15.7 | T | 10.2 | T |
| 23 | 800 | 0.6 | T | 40 | 0.24 | 0.25 | 14.5 | 7.7 | 15.2 | T | 11.4 | T |
| 24 | 800 | 0.6 | T | 38 | 0.28 | 0.27 | 14.2 | 7.7 | 15.4 | T | 12.2 | T |
| 25 | 790 | 0.5 | T | 45 | 0.08 | 0.25 | 12.9 | 6.9 | 19.3 | T | 12.2 | T |
| 26 | 850 | 0.5 | T | 47 | 0.07 | 0.25 | 14.8 | 8.0 | 15.3 | T | 11.3 | T |
| 27 | 830 | 0.5 | T | 48 | 0.05 | 0.30 | 15.2 | 8.2 | 12.5 | T | 12.6 | T |
| 28 | 800 | 0.5 | T | 40 | 0.20 | 0.30 | 14.5 | 8.0 | 17.4 | T | 12.9 | T |
| 29 | 820 | 0.5 | T | 35 | 0.28 | 0.25 | 15.2 | 7.9 | 9.6 | T | 11.2 | T |
| 30 | 720 | 0.5 | T | 35 | 0.05 | 0.25 | 9.7 | 5.3 | 30.6 | T | 14.2 | F |
| 31 | 720 | 0.5 | T | 30 | 0.18 | 0.25 | 9.9 | 5.1 | 29.1 | T | 14.1 | F |
| 32 | 780 | 0.5 | T | 40 | 0.15 | 0.25 | 14.9 | 9.1 | 19.3 | T | 11.2 | T |
| 33 | 760 | 0.6 | T | 37 | 0.18 | 0.25 | 17.9 | 10.9 | 6.6 | T | 10.2 | T |
| 34 | 910 | 0.5 | T | 45 | 0.11 | 0.25 | 11.3 | 6.1 | 25.2 | F | 13.0 | T |
| 35 | 950 | 0.5 | T | 45 | 0.11 | 0.25 | 11.0 | 6.1 | 26.3 | F | 13.2 | T |
| 36 | 810 | 0.2 | F | 45 | 0.04 | 0.25 | 12.5 | 7.3 | 22.3 | F | 12.3 | F |
| 37 | 750 | 0.1 | F | 30 | 0.05 | 0.25 | 10.7 | 5.8 | 27.9 | F | 13.4 | F |
| 38 | 730 | 1.1 | T | 45 | -1.05 | 0.25 | 12.4 | 6.8 | 22.3 | F | 12.4 | F |
| 39 | 830 | 1.1 | T | 27 | 0.86 | 0.25 | 13.7 | 7.6 | 16.8 | F | 11.8 | F |
| 40 | 800 | 0.5 | T | 55 | -0.17 | 0.25 | 13.3 | 7.4 | 19.0 | F | 11.9 | F |
| 41 | 820 | 0.6 | T | 55 | -0.21 | 0.25 | 13.1 | 6.7 | 17.8 | F | 12.1 | F |

### [Evaluation tests]

The non-oriented electrical steel sheet of each test number was subjected to the following evaluation tests.
(Test 1) Chemical composition measurement test
(Test 2) Sheet thickness measurement test
(Test 3) Iron loss measurement test
(Test 4) Yield stress and breaking elongation measurement test
(Test 5) Magnetic flux density measurement test
(Test 6) Thermal conductivity measurement test

Test 1 to Test 6 are described hereunder.

### [(Test 1) Chemical composition measurement test]

The chemical composition of the non-oriented electrical steel sheet of each test number was measured based on the method described above in the section [Method for measuring chemical composition of non-oriented electrical steel sheet]. As a result, the chemical composition of the non-oriented electrical steel sheet of each test number was as shown in Table 1.

### [(Test 2) Sheet thickness measurement test]

The sheet thickness of the non-oriented electrical steel sheet of each test number was measured based on the method described above in the section [Method for measuring sheet thickness t of non-oriented electrical steel sheet]. The measurement results are shown in the column "Sheet Thickness t (mm)" in Table 2.

### [(Test 3) Iron loss measurement test]

The iron loss W_{5/1000} (W/kg) of the non-oriented electrical steel sheet of each test number was determined based on the method described above in the section [Method for measuring iron loss W_{5/1000} of non-oriented electrical steel sheet]. The determined iron loss W_{5/1000} is shown in the column "Iron Loss W_{5/1000} (W/kg)" in Table 3.

In addition, for the non-oriented electrical steel sheet of each test number, the iron loss W_{10/400} at a frequency of 400 Hz and a magnetic flux density of 1.0 T after heat treatment for one hour at 800°C was determined based on the method described above in the section [Method for measuring iron loss W_{10/400} after strain relief annealing of non-oriented electrical steel sheet]. The determined iron loss W_{10/400} is shown in the column "Iron Loss W_{10/400} (W/kg) After Strain Relief Annealing" in Table 3.

### [Table 3]

**TABLE 3**

| Test Number | Iron Loss W_{5/1000} (W/kg) | Iron Loss W_{10/400} (W/kg) After Strain Relief Annealing | Yield Stress (MPa) | Breaking Elongation (%) | B₅₀ₐᵥₑ (T) | B₁ₐᵥₑ (T) | B₅₀₀ₐᵥₑ (T) | 20°C Thermal Conductivity (W/mk) | 150°C Thermal Conductivity (W/mk) | Remarks |
|---|---|---|---|---|---|---|---|---|---|---|
| 1 | 27.5 | 11.9 | 452 | 27 | 1.66 | 0.97 | 2.02 | 24 | 27 | Inventive Example |
| 2 | 25.9 | 11.0 | 472 | 26 | 1.66 | 0.98 | 2.00 | 23 | 26 | Inventive Example |
| 3 | 19.4 | 10.6 | 470 | 26 | 1.65 | 0.93 | 1.98 | 22 | 24 | Inventive Example |
| 4 | 24.9 | 11.8 | 456 | 29 | 1.65 | 0.97 | 1.98 | 23 | 26 | Inventive Example |
| 5 | 27.9 | 12.3 | 451 | 26 | 1.66 | 0.98 | 2.01 | 24 | 27 | Inventive Example |
| 6 | 22.4 | 11.1 | 460 | 28 | 1.65 | 0.91 | 1.98 | 21 | 24 | Inventive Example |
| 7 | 18.8 | 10.4 | 489 | 26 | 1.65 | 0.85 | 1.98 | 21 | 24 | Inventive Example |
| 8 | 31.5 | 11.4 | 457 | 22 | 1.67 | 0.88 | 2.05 | 26 | 29 | Inventive Example |
| 9 | 23.1 | 11.0 | 475 | 27 | 1.66 | 0.98 | 1.99 | 22 | 25 | Inventive Example |
| 10 | 23.8 | 11.5 | 483 | 24 | 1.66 | 0.98 | 2.01 | 23 | 26 | Inventive Example |
| 11 | 28.4 | 12.3 | 461 | 28 | 1.65 | 0.96 | 1.98 | 24 | 26 | Inventive Example |
| 12 | 20.2 | 8.9 | 492 | 29 | 1.66 | 0.96 | 1.99 | 21 | 24 | Inventive Example |
| 13 | 19.5 | 7.8 | 496 | 27 | 1.65 | 0.98 | 1.98 | 21 | 24 | Inventive Example |
| 14 | 19.4 | 7.8 | 488 | 26 | 1.65 | 0.98 | 1.98 | 22 | 25 | Inventive Example |
| 15 | 25.6 | 10.7 | 474 | 27 | 1.66 | 0.98 | 1.99 | 22 | 25 | Inventive Example |
| 16 | 24.4 | 11.7 | 469 | 28 | 1.66 | 0.98 | 2.00 | 23 | 26 | Inventive Example |
| 17 | 25.2 | 8.4 | 475 | 26 | 1.66 | 0.98 | 2.00 | 22 | 25 | Inventive Example |
| 18 | 24.4 | 12.0 | 476 | 26 | 1.66 | 0.98 | 2.00 | 23 | 25 | Inventive Example |
| 19 | 24.8 | 10.4 | 474 | 24 | 1.66 | 0.97 | 2.00 | 22 | 25 | Inventive Example |
| 20 | 26.4 | 11.4 | 467 | 29 | 1.66 | 0.96 | 1.99 | 23 | 25 | Inventive Example |
| 21 | 23.8 | 11.4 | 464 | 26 | 1.66 | 0.98 | 1.99 | 23 | 25 | Inventive Example |
| 22 | 24.3 | 9.4 | 476 | 28 | 1.66 | 0.96 | 2.00 | 23 | 25 | Inventive Example |
| 23 | 25.2 | 10.5 | 480 | 27 | 1.66 | 0.98 | 1.99 | 22 | 25 | Inventive Example |
| 24 | 26.1 | 11.3 | 486 | 26 | 1.66 | 0.98 | 1.99 | 22 | 25 | Inventive Example |
| 25 | 24.7 | 11.9 | 466 | 28 | 1.66 | 0.98 | 2.01 | 23 | 26 | Inventive Example |
| 26 | 21.4 | 10.1 | 457 | 27 | 1.66 | 0.93 | 1.99 | 22 | 24 | Inventive Example |
| 27 | 23.4 | 11.7 | 500 | 26 | 1.65 | 0.96 | 1.98 | 21 | 24 | Inventive Example |
| 28 | 24.9 | 12.5 | 486 | 27 | 1.66 | 0.98 | 1.99 | 22 | 25 | Inventive Example |
| 29 | 22.1 | 10.5 | 511 | 28 | 1.66 | 0.97 | 1.99 | 21 | 24 | Inventive Example |
| 30 | 31.2 | 15.0 | 452 | 27 | 1.67 | 0.97 | 2.05 | 27 | 30 | Comparative Example |
| 31 | 31.0 | 14.9 | 462 | 22 | 1.67 | 0.85 | 2.06 | 27 | 30 | Comparative Example |
| 32 | 23.8 | 11.1 | 474 | 27 | 1.64 | 0.97 | 1.96 | 22 | 24 | Comparative Example |
| 33 | 25.2 | 9.8 | 573 | 28 | 1.64 | 0.95 | 1.91 | 19 | 22 | Comparative Example |
| 34 | 22.8 | 11.0 | 370 | 19 | 1.67 | 0.69 | 2.03 | 25 | 28 | Comparative Example |
| 35 | 22.5 | 10.6 | 350 | 16 | 1.67 | 0.53 | 2.03 | 25 | 28 | Comparative Example |
| 36 | 18.2 | 13.3 | 445 | 27 | 1.66 | 0.64 | 2.00 | 24 | 27 | Comparative Example |
| 37 | 20.4 | 15.8 | 445 | 28 | 1.67 | 0.65 | 2.04 | 26 | 29 | Comparative Example |
| 38 | 21.8 | 14.6 | 445 | 28 | 1.66 | 0.68 | 2.02 | 24 | 27 | Comparative Example |
| 39 | 16.7 | 12.4 | 449 | 28 | 1.66 | 0.67 | 2.00 | 23 | 25 | Comparative Example |
| 40 | 18.5 | 13.7 | 447 | 28 | 1.66 | 0.68 | 2.00 | 23 | 26 | Comparative Example |
| 41 | 17.5 | 14.2 | 439 | 28 | 1.66 | 0.69 | 2.02 | 23 | 26 | Comparative Example |

### [(Test 4) Yield stress and breaking elongation measurement test]

The yield stress (MPa) of the non-oriented electrical steel sheet of each test number was determined based on the method described above in the section [Method for measuring yield stress]. The determined yield stress is shown in the column "Yield Stress (MPa)" in Table 3. In addition, the breaking elongation (%) of the non-oriented electrical steel sheet of each test number was determined based on a stress-strain curve obtained by the aforementioned [Method for measuring yield stress]. The determined breaking elongation is shown in the column "Breaking Elongation (%)" in Table 3.

### [(Test 5) Magnetic flux density measurement test]

The average magnetic flux density B₅₀ₐᵥₑ (T) of the non-oriented electrical steel sheet of each test number was determined based on the method described above in the section [Method for measuring average magnetic flux density B₅₀ₐᵥₑ]. The determined average magnetic flux density B₅₀ₐᵥₑ (T) is shown in the column "B₅₀ₐᵥₑ (T)" in Table 3.

In addition, the average magnetic flux density B₁ₐᵥₑ (T) of the non-oriented electrical steel sheet of each test number was determined based on the method described above in the section [Method for measuring average magnetic flux density B_{1ave]}. The determined average magnetic flux density B₁ₐᵥₑ (T) is shown in the column "B₁ₐᵥₑ (T)" in Table 3.

Furthermore, the average magnetic flux density B₅₀₀ₐᵥₑ (T) of the non-oriented electrical steel sheet of each test number was determined based on the method described above in the section [Method for measuring average magnetic flux density B_{500ave]}. The determined average magnetic flux density B₅₀₀ₐᵥₑ (T) is shown in the column "B₅₀₀ₐᵥₑ (T)" in Table 3.

### [(Test 6) Thermal conductivity measurement test]

The thermal conductivity (W/mK) at 20°C and the thermal conductivity (W/mK) at 150°C of the non-oriented electrical steel sheet of each test number was determined based on the method described above in the section [Method for measuring thermal conductivity]. The determined thermal conductivities at 20°C and 150°C are shown in the column "20°C Thermal Conductivity (W/mK)", and the column "150°C Thermal Conductivity (W/mK)" in Table 3.

### [Evaluation results]

Referring to Table 1 to Table 3, Test Nos. 1 to 29 satisfied feature 1 to feature 5. Therefore, the yield strength was 450 MPa or more, and thus high strength was obtained. In addition, the average magnetic flux density B₅₀ₐᵥₑ was 1.65 T or more, and thus excellent magnetic flux density was obtained. Furthermore, the iron loss W_{10/400} after strain relief annealing was less than F4 W/kg, and thus excellent iron loss was obtained after strain relief annealing.

Note that, in these Test Nos. 1 to 29, in addition, after strain relief annealing, the average magnetic flux density B₁ₐᵥₑ was 0.70 T or more and the average magnetic flux density B₅₀₀ₐᵥₑ was 1.98 T or more. Furthermore, the thermal conductivity at 20°C was 20 W/mK or more and the thermal conductivity at 150°C was 23 W/mK or more, and thus excellent thermal conductivity was obtained.

On the other hand, in Test Nos. 30 and 31, F1 did not satisfy Formula (1). Consequently, sufficient iron loss was not obtained after strain relief annealing.

In Test Nos. 32 and 33, F2 did not satisfy Formula (2). Consequently, sufficient magnetic flux density was not obtained. Further, in Test No. 33, the thermal conductivity at 20°C and 150°C was low. It is considered that this was because F1 was high.

In Test Nos. 34 and 35, the peak metal temperature T1 in the final annealing process was more than 900°C. Consequently, F3 was more than W_{5/1000}. As a result, sufficient yield strength and sufficient breaking elongation were not obtained.

In Test Nos. 36 and 37, the tension TE in the final annealing process was less than FA. Consequently, F3 did not satisfy Formula (3), and F4 did not satisfy Formula (4). As a result, sufficient yield strength was not obtained. In addition, the average magnetic flux density B₁ₐᵥₑ after strain relief annealing was less than 0.70 T, and thus sufficient magnetic flux density was not obtained.

In Test Nos. 38 and 39, the tension TE in the final annealing process was more than 1.0 kgf/mm². Consequently, F3 did not satisfy Formula (3), and F4 did not satisfy Formula (4). As a result, sufficient yield strength was not obtained. In addition, the average magnetic flux density B₁ₐᵥₑ after strain relief annealing was less than 0.70 T, and thus sufficient magnetic flux density was not obtained.

In Test Nos. 40 and 41, RS did not satisfy Formula (B). Consequently, F3 did not satisfy Formula (3), and F4 did not satisfy Formula (4). As a result, sufficient yield strength was not obtained. In addition, the average magnetic flux density B₁ₐᵥₑ after strain relief annealing was less than 0.70 T, and thus sufficient magnetic flux density was not obtained.

### EXAMPLE 2

The non-oriented electrical steel sheet of each test number described in Table 1 was used to produce a rotor core starting material having the shape illustrated in FIG. 1A, and a stator core starting material having the shape illustrated in FIG. 3. Specifically, the non-oriented electrical steel sheet of each test number was subjected to punching to produce a rotor core starting material. Further, the non-oriented electrical steel sheet of each test number was subjected to punching to produce an intermediate material for a stator core starting material. The intermediate material was subjected to strain relief annealing at 800°C for one hour to produce a stator core starting material.

The rotor core starting material and the stator core starting material of each test number were subjected to the following evaluation tests.
(Test 7) Magnetic properties evaluation test
(Test 8) Test to measure sheet thickness of inclined portion of interlocking part and sheet thickness of flat portion
(Test 9) Test to measure hardness of inclined portion of interlocking part and hardness of flat portion

Hereunder, test 7 to test 9 are described.

### [(Test 7) Magnetic properties evaluation test]

The iron loss W_{5/1000} (W/kg) of the rotor core starting material of each test number was determined based on the method described above in the section [Method for measuring magnetic properties of rotor core starting material]. Note that, the size of the test specimen was set to 16 mm × 8 mm in width × the sheet thickness. The determined iron loss W_{5/1000} (W/kg) is shown in Table 4A.

In addition, the iron loss W_{10/400} (W/kg) of the stator core starting material of each test number was determined based on the method described above in the section [Method for measuring magnetic properties of stator core starting material]. Note that, the size of the test specimen was set to 16 mm × 8 mm in width × the sheet thickness. The determined iron loss W_{10/400} (W/kg) is shown in Table 4B.

### [Table 4A]

**TABLE 4A**

| Test Number | Rotor Core | | | | | | |
|---|---|---|---|---|---|---|---|
| | Iron Loss W_{5/1000} (W/kg) | Flat Portion Sheet Thickness PT₁₄ (mm) | Inclined Portion Sheet Thickness PT₁₂₁ (mm) | H₁₄ (HV) | H₁₄+40 | H₁₂₁ (HV) | H₁₂₁≥ H₁₄+40 |
| 1 | 27.5 | 0.250 | 0.210 | 195 | 235 | 256 | T |
| 2 | 25.9 | 0.250 | 0.200 | 205 | 245 | 281 | T |
| 3 | 19.4 | 0.250 | 0.190 | 212 | 252 | 303 | T |
| 4 | 24.9 | 0.250 | 0.210 | 194 | 234 | 255 | T |
| 5 | 27.9 | 0.270 | 0.220 | 193 | 233 | 264 | T |
| 6 | 22.4 | 0.300 | 0.250 | 212 | 252 | 275 | T |
| 7 | 18.8 | 0.270 | 0.220 | 225 | 265 | 295 | T |
| 8 | 31.5 | 0.250 | 0.210 | 186 | 226 | 247 | T |
| 9 | 23.1 | 0.250 | 0.200 | 208 | 248 | 284 | T |
| 10 | 23.8 | 0.250 | 0.210 | 210 | 250 | 271 | T |
| 11 | 28.4 | 0.270 | 0.210 | 193 | 233 | 277 | T |
| 12 | 20.2 | 0.200 | 0.160 | 218 | 258 | 294 | T |
| 13 | 19.5 | 0.150 | 0.120 | 215 | 255 | 291 | T |
| 14 | 19.4 | 0.150 | 0.120 | 213 | 253 | 289 | T |
| 15 | 25.6 | 0.250 | 0.200 | 205 | 245 | 281 | T |
| 16 | 24.4 | 0.250 | 0.210 | 203 | 243 | 263 | T |
| 17 | 25.2 | 0.200 | 0.160 | 209 | 249 | 285 | T |
| 18 | 24.4 | 0.270 | 0.210 | 208 | 248 | 292 | T |
| 19 | 24.8 | 0.250 | 0.210 | 210 | 250 | 270 | T |
| 20 | 26.4 | 0.270 | 0.230 | 203 | 243 | 259 | T |
| 21 | 23.8 | 0.250 | 0.200 | 202 | 242 | 278 | T |
| 22 | 24.3 | 0.200 | 0.150 | 205 | 245 | 300 | T |
| 23 | 25.2 | 0.250 | 0.200 | 209 | 249 | 285 | T |
| 24 | 26.1 | 0.270 | 0.220 | 211 | 251 | 281 | T |
| 25 | 24.7 | 0.250 | 0.210 | 202 | 242 | 263 | T |
| 26 | 21.4 | 0.250 | 0.200 | 209 | 249 | 285 | T |
| 27 | 23.4 | 0.300 | 0.240 | 221 | 261 | 297 | T |
| 28 | 24.9 | 0.300 | 0.250 | 211 | 251 | 274 | T |
| 29 | 22.1 | 0.250 | 0.210 | 224 | 264 | 285 | T |
| 30 | 31.2 | 0.250 | 0.210 | 182 | 222 | 243 | T |
| 31 | 31.0 | 0.250 | 0.200 | 187 | 227 | 263 | T |
| 32 | 23.8 | 0.250 | 0.210 | 201 | 241 | 262 | T |
| 33 | 25.2 | 0.250 | 0.200 | 232 | 272 | 308 | T |
| 34 | 22.8 | 0.250 | 0.200 | 184 | 224 | 260 | T |
| 35 | 22.5 | 0.250 | 0.210 | 181 | 221 | 242 | T |
| 36 | 18.2 | 0.250 | 0.200 | 197 | 237 | 273 | T |
| 37 | 20.4 | 0.250 | 0.210 | 187 | 227 | 247 | T |
| 38 | 21.8 | 0.250 | 0.210 | 198 | 238 | 259 | T |
| 39 | 16.7 | 0.250 | 0.210 | 208 | 248 | 269 | T |
| 40 | 18.5 | 0.250 | 0.210 | 205 | 245 | 266 | T |
| 41 | 17.5 | 0.250 | 0.210 | 204 | 244 | 265 | T |

### [Table 4B]

**TABLE 4B**

| Test Number | Stator Core | | | | | | Remarks |
|---|---|---|---|---|---|---|---|
| | Iron Loss W_{10/400} (W/kg) | Flat Portion Sheet Thickness PT24 (mm) | Inclined Portion Sheet Thickness PT₂₂₁ (mm) | H₂₄ (HV) | H221 (HV) | H₂₂₁≤ H₂₄±10 | |
| 1 | 11.9 | 0.250 | 0.210 | 188 | 187 | T | Inventive Example |
| 2 | 11.0 | 0.250 | 0.200 | 199 | 201 | T | Inventive Example |
| 3 | 10.6 | 0.250 | 0.190 | 208 | 207 | T | Inventive Example |
| 4 | 11.8 | 0.250 | 0.210 | 187 | 187 | T | Inventive Example |
| 5 | 12.3 | 0.270 | 0.220 | 187 | 188 | T | Inventive Example |
| 6 | 11.1 | 0.300 | 0.250 | 208 | 208 | T | Inventive Example |
| 7 | 10.4 | 0.270 | 0.220 | 222 | 221 | T | Inventive Example |
| 8 | 11.4 | 0.250 | 0.210 | 177 | 179 | T | Inventive Example |
| 9 | 11.0 | 0.250 | 0.200 | 203 | 205 | T | Inventive Example |
| 10 | 11.5 | 0.250 | 0.210 | 205 | 206 | T | Inventive Example |
| 11 | 12.3 | 0.270 | 0.210 | 185 | 184 | T | Inventive Example |
| 12 | 8.9 | 0.200 | 0.160 | 213 | 213 | T | Inventive Example |
| 13 | 7.8 | 0.150 | 0.120 | 209 | 209 | T | Inventive Example |
| 14 | 7.8 | 0.150 | 0.120 | 207 | 206 | T | Inventive Example |
| 15 | 10.7 | 0.250 | 0.200 | 199 | 200 | T | Inventive Example |
| 16 | 11.7 | 0.250 | 0.210 | 196 | 198 | T | Inventive Example |
| 17 | 8.4 | 0.200 | 0.160 | 203 | 205 | T | Inventive Example |
| 18 | 12.0 | 0.270 | 0.210 | 202 | 200 | T | Inventive Example |
| 19 | 10.4 | 0.250 | 0.210 | 204 | 203 | T | Inventive Example |
| 20 | 11.4 | 0.270 | 0.230 | 197 | 197 | T | Inventive Example |
| 21 | 11.4 | 0.250 | 0.200 | 196 | 196 | T | Inventive Example |
| 22 | 9.4 | 0.200 | 0.150 | 199 | 199 | T | Inventive Example |
| 23 | 10.5 | 0.250 | 0.200 | 203 | 202 | T | Inventive Example |
| 24 | 11.3 | 0.270 | 0.220 | 205 | 206 | T | Inventive Example |
| 25 | 11.9 | 0.250 | 0.210 | 196 | 197 | T | Inventive Example |
| 26 | 10.1 | 0.250 | 0.200 | 204 | 203 | T | Inventive Example |
| 27 | 11.7 | 0.300 | 0.240 | 216 | 216 | T | Inventive Example |
| 28 | 12.5 | 0.300 | 0.250 | 205 | 204 | T | Inventive Example |
| 29 | 10.5 | 0.250 | 0.210 | 219 | 219 | T | Inventive Example |
| 30 | 15.0 | 0.250 | 0.210 | 172 | 171 | T | Comparative Example |
| 31 | 14.9 | 0.250 | 0.200 | 177 | 177 | T | Comparative Example |
| 32 | 11.1 | 0.250 | 0.210 | 194 | 195 | T | Comparative Example |
| 33 | 9.8 | 0.250 | 0.200 | 224 | 223 | T | Comparative Example |
| 34 | 11.0 | 0.250 | 0.200 | 182 | 180 | T | Comparative Example |
| 35 | 10.6 | 0.250 | 0.210 | 179 | 181 | T | Comparative Example |
| 36 | 13.3 | 0.250 | 0.200 | 191 | 191 | T | Comparative Example |
| 37 | 15.8 | 0.250 | 0.210 | 178 | 180 | T | Comparative Example |
| 38 | 14.6 | 0.250 | 0.210 | 189 | 190 | T | Comparative Example |
| 39 | 13.5 | 0.250 | 0.210 | 203 | 202 | T | Comparative Example |
| 40 | 13.7 | 0.250 | 0.210 | 199 | 200 | T | Comparative Example |
| 41 | 14.2 | 0.250 | 0.210 | 199 | 198 | T | Comparative Example |

### [(Test 8) Test to measure sheet thickness of inclined portion of interlocking part and sheet thickness of flat portion]

The sheet thickness PT₁₄ of the flat portion 14 and the sheet thickness PT₁₂₁ of the inclined portion 121 of the rotor core starting material were determined based on the method described above in the section [Method for measuring sheet thickness PT₁₄ of flat portion 14 and sheet thickness PT₁₂₁ of inclined portion 121]. In addition, the sheet thickness PT₂₄ of the flat portion 24 and the sheet thickness PT₂₂₁ of the inclined portion 221 of the stator core starting material were determined based on the method described above in the section [Method for measuring sheet thickness PT₂₄ of flat portion 24 and sheet thickness PT₂₂₁ of inclined portion 221]. The determined sheet thickness PT₁₄ (mm), sheet thickness PT₁₂₁ (mm), sheet thickness PT₂₄ (mm), and sheet thickness PT₂₂₁ (mm) are shown in Table 4 (Table 4A and Table 4B).

### [(Test 9) Test to measure hardness of inclined portion of interlocking part and hardness of flat portion]

The Vickers hardness H₁₄ of the flat portion 14 and the Vickers hardness H₁₂₁ of the inclined portion 121 of the rotor core starting material were determined based on the method described above in the section [Method for measuring Vickers hardness H₁₄ of flat portion 14 and Vickers hardness H₁₂₁ of inclined portion 121]. In addition, the Vickers hardness H₂₄ of the flat portion 24 and the Vickers hardness H₂₂₁ of the inclined portion 221 of the stator core starting material were determined based on the method described above in the section [Method for measuring Vickers hardness H₂₄ of flat portion 24 and Vickers hardness H₂₂₁ of inclined portion 221]. The determined Vickers hardness H₁₄ (HV), Vickers hardness H₁₂₁ (HV), Vickers hardness H₂₄ (HV), and Vickers hardness H₂₂₁ (HV) are shown in Table 4.

### [Evaluation results]

Referring to Table 4 (Table 4A and Table 4B), in the rotor core starting materials of Test Nos. 1 to 29 that are inventive examples, the sheet thickness of the inclined portion was equal to or less than 85% of the sheet thickness of the flat portion, the Vickers hardness H₁₄ of the flat portion was 180 HV or more, and the Vickers hardness H₁₂₁ of the inclined portion was H₁₄ + 40 HV or more. Further, in the stator core starting materials of Test Nos. 1 to 29 that are inventive examples, the sheet thickness of the inclined portion was equal to or less than 85% of the sheet thickness of the flat portion, the Vickers hardness H₂₄ of the flat portion was 175 HV or more, and the Vickers hardness H₂₂₁ of the inclined portion was within ± 10 HV of the Vickers hardness H₂₄.

An embodiment of the present disclosure has been described above. However, the embodiment described above is merely an example for carrying out the present disclosure. Therefore, the present disclosure is not limited to the above-described embodiment, and can be implemented by appropriately modifying the above-described embodiment within a range not departing from the gist thereof.

## Claims

1. A non-oriented electrical steel sheet, having a chemical composition consisting of, in mass%,
Si: 2.0 to 4.0%,
Mn: 0.1 to 1.5%,
P: 0.15% or less,
S: 0.0030% or less,
Al: 0.1 to 2.0%,
C: 0.0050% or less,
N: 0.0050% or less,
O: 0.0500% or less,
Cr: 0 to 0.50%,
Ti: 0 to 0.0030%,
Mo: 0 to 0.100%,
Ni: 0 to 0.50%,
Cu: 0 to 0.50%,
Sn: 0 to 0.100%,
Sb: 0 to 0.100%,
Ca: 0 to 0.0050%,
Mg: 0 to 0.0030%,
rare earth metal: 0 to 0.0100%,
B: 0 to 0.0030%,
Zn: 0 to 0.0030%,
Ge: 0 to 0.0030%,
As: 0 to 0.0100%,
Co: 0 to 0.0500%,
V: 0 to 0.0030%,
Se: 0 to 0.0030%,
Zr: 0 to 0.0030%,
Nb: 0 to 0.0030%,
Pb: 0 to 0.0030%, and
Ga: 0 to 0.0030%,
with the balance being Fe and impurities,
wherein:
a sheet thickness t is 0.30 mm or less,
F1 defined by Formula (1) is 10.0 or more,
F2 defined by Formula (2) is 8.5 or less,
F3 defined by Formula (3) is equal to or less than an iron loss W_{5/1000} at a frequency of 1000 Hz and a magnetic flux density of 0.5 T, and
F4 defined by Formula (4) is not less than an iron loss W_{10/400} at a frequency of 400 Hz and a magnetic flux density of 1.0 T when the non-oriented electrical steel sheet is heat-treated for one hour at 800°C; $F 1 = 4 Si + 3 Al + 2 Mn$ (1) $F 2 = 2 Si + 3 Al + Mn$ (2) $F 3 = 45 - 12 Si - 5 Al - 2 Mn + 1000 \times t / \left(5+6Si+5Al+3Mn\right)$ (3) $F 4 = 4 + 800 \times t / \left(5+6Si+5Al+3Mn\right)$ (4)
where, a content in percent by mass of a corresponding element is substituted for each symbol of an element in Formula (1) to Formula (4), and the sheet thickness in units of mm is substituted for t.

2. The non-oriented electrical steel sheet according to claim 1, wherein the chemical composition contains one or more types of element selected from a group consisting of:
Cr: 0.01 to 0.50%,
Ti: 0.0001 to 0.0030%,
Mo: 0.001 to 0.100%,
Ni: 0.01 to 0.50%,
Cu: 0.01 to 0.50%,
Sn: 0.001 to 0.100%,
Sb: 0.001 to 0.100%,
Ca: 0.0001 to 0.0050%,
Mg: 0.0001 to 0.0030%,
rare earth metal: 0.0001 to 0.0100%,
B: 0.0001 to 0.0030%,
Zn: 0.0001 to 0.0030%,
Ge: 0.0001 to 0.0030%,
As: 0.0001 to 0.0100%,
Co: 0.0001 to 0.0500%,
V: 0.0001 to 0.0030%,
Se: 0.0001 to 0.0030%,
Zr: 0.0001 to 0.0030%,
Nb: 0.0001 to 0.0030%,
Pb: 0.0001 to 0.0030%, and
Ga: 0.0001 to 0.0030%.

3. The non-oriented electrical steel sheet according to claim 1, wherein:
a yield stress is 450 MPa or more, and
a breaking elongation is 20% or more.

4. The non-oriented electrical steel sheet according to claim 1, wherein:
when a rolling direction is designated as a reference 0° and a magnetic flux density B₅₀ in directions of respective angles at intervals of 22.5° is designated as B₅₀(0°), B₅₀(22.5°), B₅₀(45°), B₅₀(67.5°), and B₅₀(90°), respectively, an average magnetic flux density B₅₀ₐᵥₑ defined by Formula (5) is 1.65 T or more. ${B}_{50 ave} = \left({B}_{50}\left(0°\right)+2\times {B}_{50}\left(22.5°\right)+2\times {B}_{50}\left(45°\right)+2\times {B}_{50}\left(67.5°\right)+{B}_{50}\left(90°\right)\right) / 8$ (5)

5. The non-oriented electrical steel sheet according to claim 1, wherein:
when the non-oriented electrical steel sheet is heat-treated for one hour at 800°C,
an iron loss W_{10/400} is equal to or less than F4,
when a rolling direction is designated as a reference 0° and a magnetic flux density B₁ in directions of respective angles at intervals of 22.5° is designated as B₁(0°), B₁(22.5°), B₁(45°), B₁(67.5°), and B₁(90°), respectively, an average magnetic flux density B₁ₐᵥₑ defined by Formula (6) is 0.70 T or more,
when a direction of a maximum value of a magnetic flux density B₅₀₀ is designated as a reference 0° and the magnetic flux density B₅₀₀ in directions of respective angles at intervals of 22.5° is designated as B₅₀₀(0'), B₅₀₀(22.5°), B₅₀₀(45°), B₅₀₀(67.5°), and B₅₀₀(90°), respectively, an average magnetic flux density B₅₀₀ₐᵥₑ defined by Formula (7) is 1.98 T or more. ${B}_{1 ave} = \left({B}_{1}\left(0°\right)+2\times {B}_{1}\left(22.5°\right)+2\times {B}_{1}\left(45°\right)+2\times {B}_{1}\left(67.5°\right)+{B}_{1}\left(90°\right)\right) / 8$ (6) ${B}_{500 ave} = \left({B}_{500}\left(0°\right)+2\times {B}_{500}\left(22.5°\right)+2\times {B}_{500}\left(45°\right)+2\times {B}_{500}\left(67.5°\right)+{B}_{500}\left(90°\right)\right) / 8$ (7)

6. The non-oriented electrical steel sheet according to claim 1, wherein:
a thermal conductivity at 20°C is 20 W/mK or more, and
the thermal conductivity at 150°C is 23 W/mK or more.

7. A rotor core comprising a plurality of rotor core starting materials stacked on top of one another, wherein:
the rotor core starting material is a sheet shape,
the rotor core starting material has a chemical composition consisting of, in mass%,
Si: 2.0 to 4.0%,
Mn: 0.1 to 1.5%,
P: 0.15% or less,
S: 0.0030% or less,
Al: 0.1 to 2.0%,
C: 0.0050% or less,
N: 0.0050% or less,
O: 0.0500% or less,
Cr: 0 to 0.50%,
Ti: 0 to 0.0030%,
Mo: 0 to 0.100%,
Ni: 0 to 0.50%,
Cu: 0 to 0.50%,
Sn: 0 to 0.100%,
Sb: 0 to 0.100%,
Ca: 0 to 0.0050%,
Mg: 0 to 0.0030%,
rare earth metal: 0 to 0.0100%,
B: 0 to 0.0030%,
Zn: 0 to 0.0030%,
Ge: 0 to 0.0030%,
As: 0 to 0.0100%,
Co: 0 to 0.0500%,
V: 0 to 0.0030%,
Se: 0 to 0.0030%,
Zr: 0 to 0.0030%,
Nb: 0 to 0.0030%,
Pb: 0 to 0.0030%, and
Ga: 0 to 0.0030%,
with the balance being Fe and impurities, and
in the rotor core starting material,
a sheet thickness t is 0.30 mm or less,
F1 defined by Formula (1) is 10.0 or more,
F2 defined by Formula (2) is 8.5 or less,
F3 defined by Formula (3) is equal to or less than an iron loss W_{5/1000} at a frequency of 1000 Hz and a magnetic flux density of 0.5 T, and
F4 defined by Formula (4) is not less than an iron loss W_{10/400} at a frequency of 400 Hz and a magnetic flux density of 1.0 T when the rotor core starting material is heat-treated for one hour at 800°C; $F 1 = 4 Si + 3 Al + 2 Mn$ (1) $F 2 = 2 Si + 3 Al + Mn$ (2) $F 3 = 45 - 12 Si - 5 Al - 2 Mn + 1000 \times t / \left(5+6Si+5Al+3Mn\right)$ (3) $F 4 = 4 + 800 \times t / \left(5+6Si+5Al+3Mn\right)$ (4)
where, a content in percent by mass of a corresponding element is substituted for each symbol of an element in Formula (1) to Formula (4), and the sheet thickness in units of mm is substituted for t.

8. The rotor core according to claim 7,
the rotor core starting material further including:
an interlocking part, and
a flat portion that is a flat region,
wherein:
the interlocking part includes an inclined portion that is formed to be inclined with respect to the flat portion, and
a sheet thickness of the inclined portion is equal to or less than 85% of a sheet thickness of the flat portion.

9. The rotor core according to claim 8, wherein:
in a cross section including a central axis of the rotor core starting material,
a Vickers hardness H₁₄ at a center position of the sheet thickness of the flat portion is 180 HV or more, and
a Vickers hardness H₁₂₁ at a center position of the sheet thickness of the inclined portion is H₁₄ + 40 HV or more.

10. A stator core comprising a plurality of stator core starting materials stacked on top of one another, wherein:
the stator core starting material is an annular sheet shape,
the stator core starting material includes a plurality of teeth portions extending in a radial direction of the stator core starting material that are arranged with a gap between each of the teeth portions in a circumferential direction of the stator core starting material,
the stator core starting material has a chemical composition consisting of, in mass%,
Si: 2.0 to 4.0%,
Mn: 0.1 to 1.5%,
P: 0.15% or less,
S: 0.0030% or less,
Al: 0.1 to 2.0%,
C: 0.0050% or less,
N: 0.0050% or less,
O: 0.0500% or less,
Cr: 0 to 0.50%,
Ti: 0 to 0.0030%,
Mo: 0 to 0.100%,
Ni: 0 to 0.50%,
Cu: 0 to 0.50%,
Sn: 0 to 0.100%,
Sb: 0 to 0.100%,
Ca: 0 to 0.0050%,
Mg: 0 to 0.0030%,
rare earth metal: 0 to 0.0100%,
B: 0 to 0.0030%,
Zn: 0 to 0.0030%,
Ge: 0 to 0.0030%,
As: 0 to 0.0100%,
Co: 0 to 0.0500%,
V: 0 to 0.0030%,
Se: 0 to 0.0030%,
Zr: 0 to 0.0030%,
Nb: 0 to 0.0030%,
Pb: 0 to 0.0030%, and,
Ga: 0 to 0.0030%,
with the balance being Fe and impurities, and
in the stator core starting material,
a sheet thickness t is 0.30 mm or less,
F1 defined by Formula (1) is 10.0 or more,
F2 defined by Formula (2) is 8.5 or less, and
F4 defined by Formula (4) is not less than an iron loss W_{10/400} at a frequency of 400 Hz and a magnetic flux density of 1.0 T; $F 1 = 4 Si + 3 Al + 2 Mn$ (1) $F 2 = 2 Si + 3 Al + Mn$ (2) $F 4 = 4 + 800 \times t / \left(5+6Si+5Al+3Mn\right)$ (4)
where, a content in percent by mass of a corresponding element is substituted for each symbol of an element in Formula (1), Formula (2), and Formula (4), and the sheet thickness in units of mm is substituted for t.

11. The stator core according to claim 10,
the stator core starting material further including:
an interlocking part, and
a flat portion that is a flat region,
wherein:
the interlocking part includes an inclined portion that is formed to be inclined with respect to the flat portion, and
a sheet thickness of the inclined portion is equal to or less than 85% of a sheet thickness of the flat portion.

12. The stator core according to claim 11, wherein:
in a cross section including a central axis of the stator core starting material,
a Vickers hardness H₂₄ at a center position of the sheet thickness of the flat portion is 175 HV or more, and
a Vickers hardness H₂₂₁ at a center position of the sheet thickness of the inclined portion is within ±10 HV of the Vickers hardness H₂₄.

13. A motor, comprising:
the rotor core according to any one of claim 7 to claim 9, and
the stator core according to any one of claim 10 to claim 12.
